(19) Europäisches Patentamt
European Patent Office
Office européen des brevets

(11) **EP 4 598 192 A1**

(12) **EUROPEAN PATENT APPLICATION**
published in accordance with Art. 153(4) EPC

(43) Date of publication:
**06.08.2025 Bulletin 2025/32**

(21) Application number: **22960958.1**

(22) Date of filing: **29.09.2022**

(51) International Patent Classification (IPC):
*H04W 72/0446* (2023.01)    *H04W 16/26* (2009.01)
*H04W 72/20* (2023.01)

(52) Cooperative Patent Classification (CPC):
**H04W 16/26; H04W 72/0446; H04W 72/20**

(86) International application number:
**PCT/JP2022/036592**

(87) International publication number:
**WO 2024/069899 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **KURITA, Daisuke**
**Tokyo 100-6150 (JP)**
• **HARADA, Hiroki**
**Tokyo 100-6150 (JP)**
• **SUN, Weiqi**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54)    **REPEATER AND COMMUNICATION METHOD**

(57)    A repeater comprises: a reception unit that receives control information through a first link used for the exchange of control information between a base station and the repeater; and a control unit that determines, on the basis of the control information, a time resource allocated to the repeater for a second link used for transferring signals between the base station and a terminal.

FIG. 4

## Description

Technical Field

The present disclosure relates to a repeater and a communication method.

Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

In Rel-18 of 3GPP, a Study Item (SI) on network-controlled repeaters was established (e.g., see Non-Patent Literature (hereinafter, referred to as NPL) 1). It was determined to discuss beam control, timing control, ON/-OFF control of power in Downlink-Uplink (DL-UL), and the like on network-controlled repeaters, unlike conventional amplify-and-forward repeaters.

Note that a network-controlled repeater may be referred to as an NR network-controlled repeater or smart repeater. Hereinafter, a network-controlled repeater may be simply referred to as a repeater.

Citation List

Non-Patent Literature

NPL 1
3GPP TSG RAN Meeting #94e, RP-213700, Electronic Meeting, Dec. 6-17, 2021
NPL 2
3GPP TS 38.214 V17.3.0 (2022-09)

Summary of Invention

However, there is room for study on the time resource allocation for a link used for forwarding a signal between a base station and a terminal in a repeater.

An aspect of the present disclosure is to provide a repeater and a communication method each capable of appropriately executing time resource allocation for a link used for forwarding a signal between a base station and a terminal in a repeater.

Solution to Problem

A repeater according to one aspect of the present disclosure includes: a reception section that receives control information via a first link used for exchanging the control information between a base station and the repeater; and a control section that determines, based on the control information, a time resource allocated to the repeater in a second link used for forwarding a signal between the base station and a terminal.

A communication method according to one aspect of the present disclosure is a communication method for a repeater, the communication method including: receiving control information via a first link used for exchanging the control information between a base station and the repeater; and determining, based on the control information, a time resource allocated to the repeater in a second link used for forwarding a signal between the base station and a terminal.

Brief Description of Drawings

FIG. 1 illustrates an example of a radio communication system according to an embodiment of the present disclosure;
FIG. 2 illustrates an example of a frequency range (FR) used in the radio communication system;
FIG. 3 illustrates exemplary configurations of a radio frame, a subframe, and a slot used in the radio communication system;
FIG. 4 illustrates an exemplary configuration of a network control repeater (NCR);
FIG. 5 illustrates examples of start symbol S and number of symbols L recognized by a UE as a valid PDSCH allocation;
FIG. 6 illustrates other examples of start symbol S and number of symbols L recognized by the UE as a valid PUSCH allocation;
FIG. 7 is a diagram for describing Proposal 2.1-Option 1;
FIG. 8 is a diagram for describing Proposal 2.2;
FIG. 9 is another diagram for describing Proposal 2.2;
FIG. 10 is a diagram for describing repetition of PDSCH;
FIG. 11 is a diagram for describing repetition Type A of PUSCH;
FIG. 12 is a diagram for describing repetition Type B of PUSCH;
FIG. 13 is a diagram for describing Proposal 4.1-Option 1;
FIG. 14 is a diagram for describing Proposal 4.1-Option 2;
FIG. 15 is a diagram for describing repetition and TBoMS;
FIG. 16 is a diagram for describing Proposal 4.2;
FIG. 17 is a diagram for describing an available slot counting;
FIG. 18 is a diagram for describing Proposal 4.3;
FIG. 19 illustrates an example of a Time Domain Resource Assignment or Allocation (TDRA) table;

FIG. 20 is a diagram for describing multi-PDSCH/multi-PUSCH;

FIG. 21 is a diagram for describing Proposal 5.2;

FIG. 22 illustrates another example of the TDRA table;

FIG. 23 illustrates an example of a functional configuration of a repeater according to the embodiment of the present disclosure;

FIG. 24 illustrates an example of a hardware configuration of the repeater according to the embodiment of the present disclosure; and

FIG. 25 illustrates an exemplary configuration of a vehicle.

Description of Embodiments

Hereinafter, an embodiment according to an aspect of the present disclosure will be described with reference to the drawings. Note that the embodiment described below is merely an example, and an embodiment to which the present disclosure is applied is not limited to the following embodiment.

Further, in the embodiment of the present disclosure to be described below, the terms such as a Synchronization signal (SS), a Primary SS (PSS), a Secondary SS (SSS), a Physical broadcast channel (PBCH), a Physical random access channel (PRACH), a Physical Downlink Control Channel (PDCCH), a Physical Downlink Shared Channel (PDSCH), a Physical Uplink Control Channel (PUCCH), a Physical Uplink Shared Channel (PUSCH), and the like, which are used in 5G NR (New Radio), are used. This is for the sake of convenience in description, and the same signals, functions, and the like may be called by other names.

Further, in the embodiment of the present disclosure, the Duplex method may be a Time Division Duplex (TDD) method, a Frequency Division Duplex (FDD) method, or other methods (for example, Flexible Duplex method).

Further, in the embodiment of the present disclosure, the term "configured" with respect to a radio parameter or the like may refer to a predetermined value being preconfigured, or a radio parameter, which is indicated from a base station or a terminal, being configured.

<Radio Communication System>

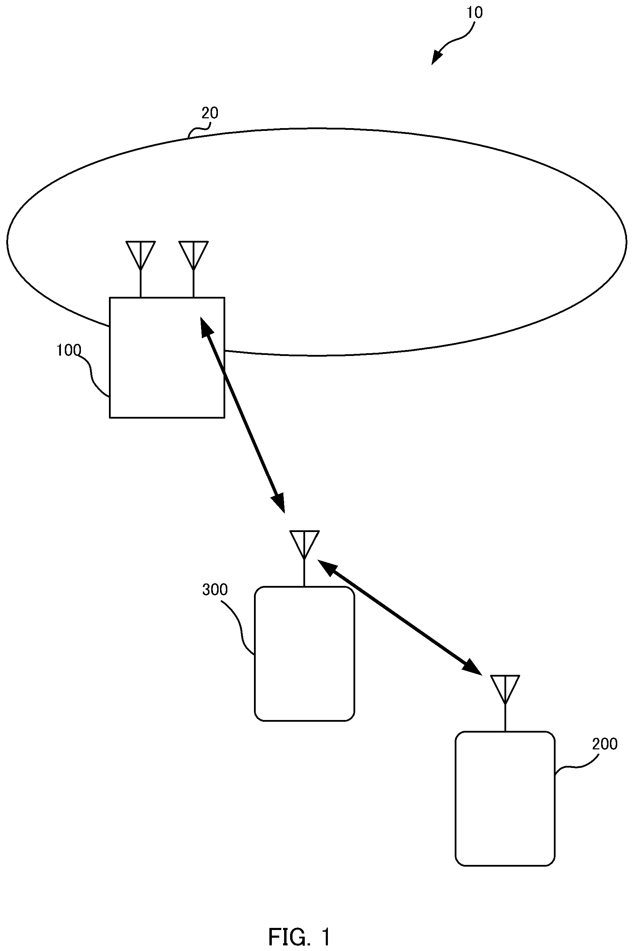

FIG. 1 illustrates an example of radio communication system 10 according to an embodiment of the present disclosure. Radio communication system 10 is a radio communication system conforming to 5G NR, and includes Next Generation-Radio Access Network 20 (hereinafter, referred to as NG-RAN 20) and terminal 200 (hereinafter, also referred to as User Equipment (UE) 200).

Note that radio communication system 10 may be a radio communication system conforming to a scheme called Beyond 5G, 5G Evolution, or 6G.

NG-RAN 20 includes base station 100 (hereinafter also referred to as gNB 100). Note that the number of gNBs and the number of UEs are not limited to the example illustrated in FIG. 1.

NG-RAN 20 actually includes a plurality of NG-RAN nodes, specifically, gNBs (or ng-eNBs), and is connected to a core network (5GC, not illustrated) conforming to 5G. Note that NG-RAN 20 and 5GC may be simply expressed as "network." Further, in the following, the gNB may be read as network (NW).

gNB 100 is, for example, a base station conforming to 5G, and performs radio communication with UE 200 according to 5G. Further, in the example illustrated in FIG. 1, repeater 300 that relays a signal between gNB 100 and UE 200 is illustrated. Repeater 300 performs a relay operation of, for example, transmitting a signal received from gNB 100 to UE 200 and transmitting a signal received from UE 200 to gNB 100. Note that "relaying" may be replaced with "forwarding." Further, the "operation" may be replaced with "processing," "control," or the like. Further, repeater 300, which has been studied in NR, will be described later.

gNB 100 and UE 200 may support Multiple-Input Multiple-Output (MIMO) that generates a beam with higher directivity by controlling a radio signal transmitted from a plurality of antenna elements, Carrier Aggregation (CA) that uses a plurality of Component Carriers (CCs) in a bundled manner, and Dual Connectivity (DC) that performs communication between UE and each of two NG-RAN nodes.

Radio communication system 10 may support a plurality of frequency ranges (FRs).

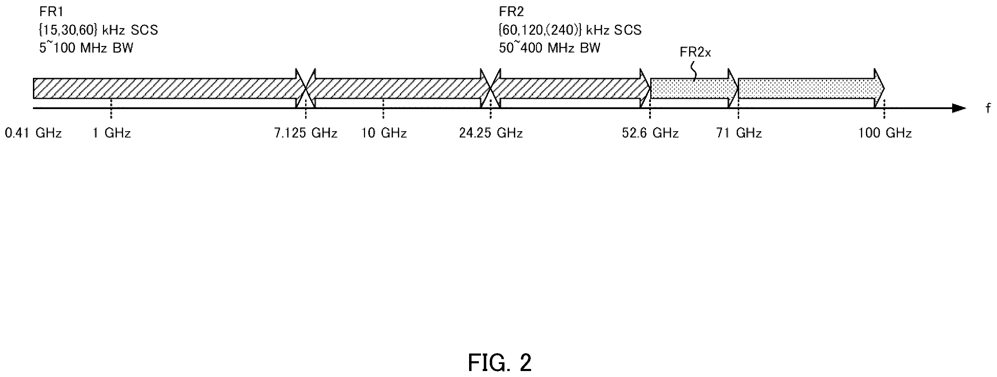

FIG. 2 illustrates examples of FRs used in radio communication system 10. As illustrated in FIG. 2, radio communication system 10 may support FR1 and FR2. The frequency bands of the respective FRs are, for example, as follows.

- FR1: 410MHz to 7.125GHz
- FR2: 24.25GHz to 52.6GHz

In FR1, sub-carrier spacing (SCS) of 15 kHz, 30 kHz, or 60 kHz may be used, and a bandwidth (BW) of 5 to 100 MHz may be used. FR 2 is higher than FR1, and SCS of 60 kHz or 120 kHz (may include 240 kHz) may be used, and a bandwidth (BW) of 50 MHz to 400 MHz may be used.

Note that the SCS may be interpreted as numerology. The numerology is defined in 3GPP TS 38.300 and corresponds to one sub-carrier spacing in a frequency domain.

Further, radio communication system 10 may support a frequency band higher than the frequency band of FR2. Specifically, radio communication system 10 may support a frequency band exceeding 52.6 GHz and up to 114.25 GHz. Such a high frequency band may be referred to as "FR2x" for convenience. In a case where a band exceeding 52.6 GHz is used, Cyclic Prefix - Orthogonal Frequency Division Multiplexing (CP-OFDM)/Discrete Fourier Transform - Spread - Orthogonal Frequency Division Multiplexing (DFT-S-OFDM) with a greater SCS may be applied.

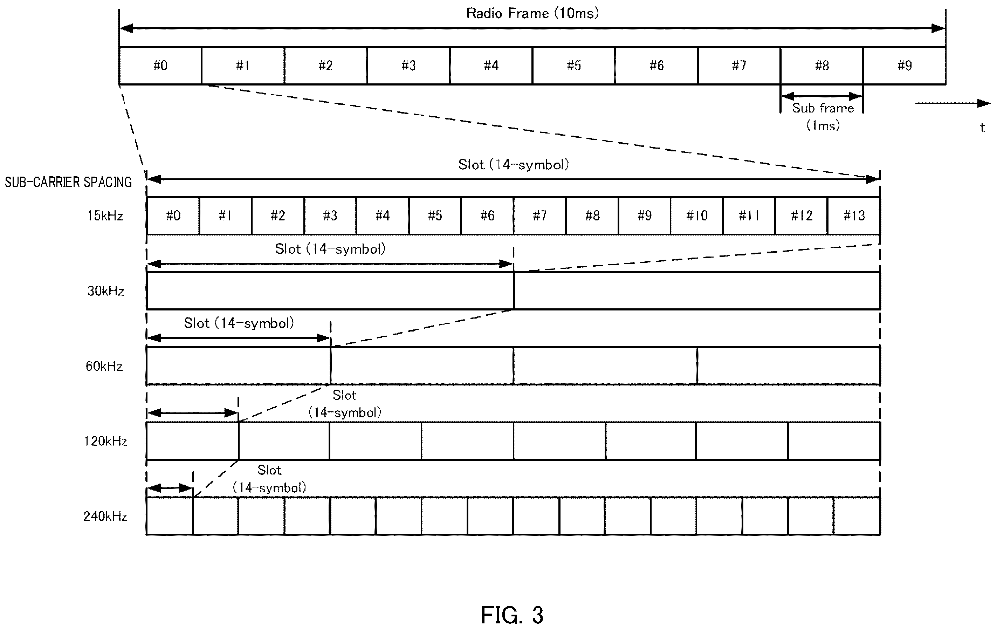

FIG. 3 illustrates exemplary configurations of a radio frame (system frame), a subframe, and a slot used in radio communication system 10. As illustrated in FIG. 3, one slot is composed of 14 symbols, and the symbol duration (and slot duration) becomes shorter as the SCS becomes larger (wider). The SCS is not limited to the interval (frequency) illustrated in FIG. 3. For example, 480 kHz, 960 kHz, or the like may be used as SCS.

Further, the number of symbols composing one slot is not necessarily 14 symbols (for example, the number of symbols may be 28 or 56 symbols). Further, the number of slots per subframe may be different depending on SCS.

Note that the time direction (t) illustrated in FIG. 3 may be referred to as a time domain, a symbol duration, a symbol time, or the like. Further, a frequency direction may be referred to as a frequency domain, a resource block, a subcarrier, a bandwidth part (BWP), or the like.

gNB 100 transmits control information, configuration information, and the like of gNB 100 to UE 200 as a downlink (DL) signal.

Further, for example, gNB 100 receives, as an uplink (UL) signal, control information of gNB 100, a data signal, information on processing capability of UE 200 (terminal capability (information); for example, UE capability), and the like from UE 200.

Repeater 300 performs a forwarding operation of forwarding the DL signal to UE 200. Further, repeater 300 performs a forwarding operation of forwarding the UL signal to gNB 100. Note that, in the following, the UL signal received by gNB 100 from UE 200 and/or the DL signal received by UE 200 from gNB 100 may be a signal relayed by repeater 300.

UE 200 is a communication apparatus with a radio communication function, such as a smartphone, a mobile phone, a tablet, a wearable terminal, or a communication module for Machine-to-Machine (M2M).

UE 200 receives a control signal or a data signal from gNB 100 in DL and transmits a control signal or a data signal to gNB 100 in UL, thereby utilizing various communication services provided by radio communication system 10. Further, UE 200 receives various reference signals transmitted from gNB 100 and performs measurement of a propagation path quality based on the reception results of the reference signals.

Channels used for DL signal transmission include, for example, a data channel and a control channel. For example, the data channel may include a Physical Downlink Shared Channel (PDSCH), and the control channel may include a Physical Downlink Control Channel (PDCCH). For example, gNB 100 transmits the control information to UE 200 using PDCCH and transmits the data signal in DL using PDSCH. Note that PDSCH is an example of a downlink shared channel, and PDCCH is an example of a downlink control channel. Note that PDCCH may be read as downlink control information (DCI) transmitted via PDCCH, control information, or the like.

A reference signal included in the DL signal may include, for example, at least one of a Demodulation Reference Signal (DMRS), a Phase Tracking Reference Signal (PTRS), a Channel State Information - Reference Signal (CSI-RS), a Sounding Reference Signal (SRS), and a Positioning Reference Signal (PRS) for position information. For example, reference signals such as DMRS and PTRS are used for demodulation of the data signal in DL and are transmitted using PDSCH.

Channels used for UL signal transmission include, for example, a data channel and a control channel. For example, the data channel may include a Physical Uplink Shared Channel (PUSCH), and the control channel may include a Physical Uplink Control Channel (PUCCH). For example, UE 200 transmits the control information using PUCCH and transmits the data signal in UL using PUSCH. Note that PUSCH is an example of an uplink shared channel, and PUCCH is an example of an uplink control channel. The shared channel may also be referred to as a data channel. Note that PUSCH or PUCCH may be read as uplink control information (UCI), control information, or the like transmitted via PUSCH or PUCCH.

A reference signal included in the UL signal may include, for example, at least one of DMRS, PTRS, CSI-RS, SRSRS, and PRS for the position information. For example, reference signals such as DMRS and PTRS are used for demodulation of the data signal in UL and are transmitted using PUSCH.

<Regarding Repeater>

In Release 18 (Rel-18) of 3GPP, a network control repeater in NR has been discussed as a new study matter. Hereinafter, the network control repeater may be abbreviated as an NCR. The NCR may correspond to, for example, repeater 300 in FIG. 1. Hereinafter, the NCR may be referred to as NCR 300.

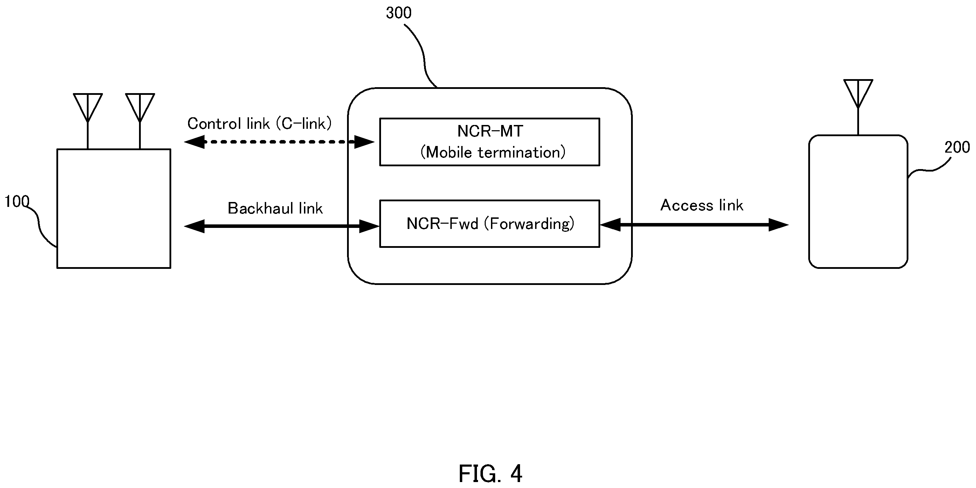

FIG. 4 illustrates an exemplary configuration of NCR 300. FIG. 4 also illustrates gNB 100 and UE 200 that are illustrated in FIG. 1.

NCR 300 is present between UE 200 and gNB 100. Note that NCR 300 may be present between UE 200 and gNB 100 or need not be present in the real space.

As illustrated in FIG. 4, for example, one (one type of) link is present between NCR 300 and UE 200. The link between NCR 300 and UE 200 may be referred to as an access link.

As illustrated in FIG. 4, for example, two (two types of) links are present between NCR 300 and gNB 100. Of the two links, the link for exchanging information between gNB 100 and NCR 300 may be referred to as a control link or a C-link. Of the two links, the link that relays a signal between gNB 100 and UE 200 may be referred to as a backhaul link.

Note that, in FIG. 4, an example in which gNB 100 included in the control link and gNB 100 included in the backhaul link are the same is illustrated, but gNB 100 included in the control link and gNB 100 included in the backhaul link may be different from each other.

NCR 300 receives a UL signal transmitted from UE 200 addressed to gNB 100 via the access link. NCR 300 transmits the received UL signal to gNB 100, which is a destination (destination gNB 100), via the backhaul link. In other words, NCR 300 forwards the UL signal, which is transmitted from UE 200 addressed to gNB 100, to destination gNB 100.

NCR 300 receives the DL signal addressed to UE 200 transmitted from gNB 100 via the backhaul link. NCR 300 transmits the received DL signal to UE 200, which is a destination (destination UE 200), via the access link. In other words, NCR 300 forwards the signal, which is transmitted from gNB 100 addressed to UE 200, to destination UE 200.

NCR 300 exchanges side control information (hereinafter referred to as SCI) via a control link.

As illustrated in FIG. 4, NCR 300 includes two functional entities referred to as NCR-MT and NCR-Fwd, respectively.

The NCR-MT is a functional entity that communicates with gNB 100 via the control link and enables information exchange with gNB 100. The information exchange with gNB 100 may be, for example, transmission and reception of the SCI. Further, the control link may be based on a Uu interface of NR.

In the NCR-MT, the SCI may include information for controlling the NCR-Fwd. The SCI may be indicated by at least one of radio resource control (RRC), a medium access control control element (MAC CE), and downlink control information (DCI) signaling.

The NCR-Fwd is a functional entity that forwards signals between gNB and UE via the backhaul link and the access link. For example, the NCR-Fwd performs amplification and forwarding of a radio frequency (RF) signal in UL. Further, the NCR-Fwd performs amplification and forward of an RF signal in DL.

The NCR-Fwd may be controlled based on the SCI received from gNB 100. For example, an operation of the NCR-Fwd may be controlled by the NCR-MT that has received the SCI.

<Agreement on Repeater>

In 3GPP, several agreements have been made on the NCR. Hereinafter, four agreement items will be described.

- Agreement 1

It has been agreed that a time domain resource corresponding to an access link beam is explicitly indicated. For example, it has been agreed that the time domain resource corresponding to the access link beam may be determined with the following option.

Option: Explicit determination based on the time domain resource explicitly indicated for each beam indication.

Note that it has been discussed that the indicated time domain resource may include indications such as a start time unit, a duration, a slot index, and a start and length indicator (SLIV).

- Agreement 2

It has been agreed that ON-OFF control over the NCR will be supported. For example, in the ON-OFF control, it has been agreed that ON-OFF control information is valid for controlling the operation (or behavior) of the NCR-Fwd.

- Agreement 3

It has been agreed that DL-UL (TDD) control over the NCR-Fwd may be indicated with new signaling. For example, the following options are taken into account for a flexible symbol based on a semi-static configuration such as TDD-UL-DL-ConfigCommon and/or TDD-UL-DL-ConfigDedicated.

Option 1: The NCR-Fwd is assumed to be off or not to forward a flexible symbol;
Option 2: The NCR-Fwd follows a TDD operation determined by the NCR-MT. That is, the operation of the NCR-Fwd is determined by the NCR-MT based on a slot format indicator (SFI) indication or scheduling received from the gNB; and
Option 3: The NCR-Fwd follows new dynamic side control signaling for DL/UL forwarding to the NCR-Fwd via a flexible symbol.

- Agreement 4

It has been agreed that a backhaul link beam of the NCR-Fwd may be indicated with new signaling. For example, in a case where an adaptive beam is applied to the control link and the backhaul link, the following options are taken into account for the indication and determination of the beam for the backhaul link.

Option 1: The beam for the backhaul link is indicated by new signaling; and
Option 2: The beam for the backhaul link is determined by a pre-defined rule.

Note that, in a slot and/or symbol in which DL reception and UL transmission are performed simultaneously in both the control link and the backhaul link, the beam for the backhaul link may be the same as the beam for the control link. Otherwise, the beam for the backhaul link may continue.

<Regarding PDSCH Time Domain Resource Allocation>

The DCI for scheduling PDSCH includes a Time Domain Resource Assignment or Allocation (TDRA) field indicating a row index. The terminal refers to, for example, a table in which the row index and information on the time domain resource allocation are associated with each other, based on the value of the row index of the TDRA field included in the DCI, and thus determines the time domain resource (PDSCH) allocated to the terminal. Note that the information on the time domain resource allocation may be referred to as a parameter. The table may be referred to as a list.

The information included in the table (information on allocation of PDSCH) is indicated using, for example, higher layer signaling such as RRC. For example, the information included in the table is indicated using an information element (IE) such as a PDSCH-TimeDomainResourceAllocationList.

The information included in the table includes, for example, information indicating an offset from a slot in which the DCI is received to a slot to which PDSCH is allocated. The offset may be referred to as k0.

Further, the information included in the table includes information indicating a mapping type of PDSCH. Examples of the mapping types include, for example, type A and type B.

Furthermore, the information included in the table includes start symbol S of PDSCH and the number of consecutive symbols L of PDSCH. The S and L are, for example, indicated by the SLIV. The SLIV is represented by a value of, for example, 0 to 127. The SLIV is calculated based on the rules described below.

$$\text{8]} \quad \text{if } (L\text{-}1) \leq 7 \text{ then}$$

$$SLIV = 14(L\text{-}1) + S$$

$$\text{else}$$

$$SLIV = 14(14\text{-}L\text{+}1) + (14\text{-}1\text{-}S)$$

Where $0 < L \leq 14\text{-}S$, S = Start Symbol Index, L = Number of Consecutive Symbols.

The terminal derives the S and L included in the table based on, for example, the SLIV indicated using higher layer signaling and the above rule.

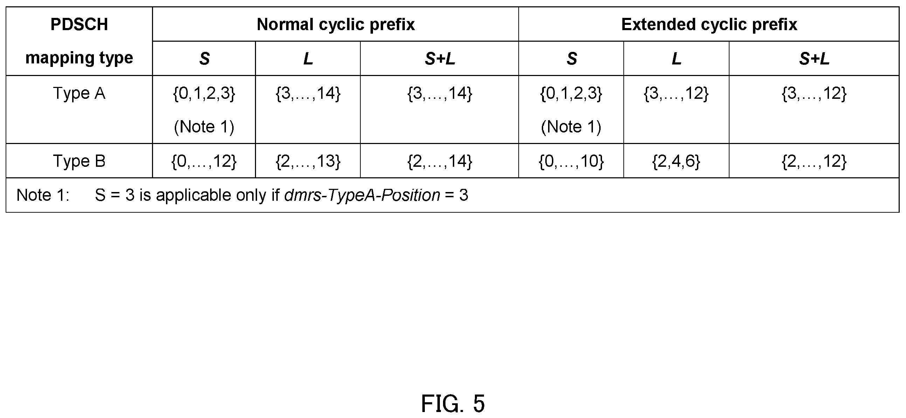

FIG. 5 illustrates examples of start symbol S and the number of symbols L recognized by the UE as a valid PDSCH allocation (see Table 5.1.2.1-1 of NPL 2). As illustrated in FIG. 5, the values of S and L, which are recognized as the valid PDSCH allocation, may be indicated for each of at least one of the PDSCH mapping type and the cyclic prefix (CP) length.

The S and L are valid combinations in normal CP when "S0 + S + L ≤ 14" is satisfied. The S and L are valid combinations in an extended CP when "S0 + S + L ≤ 12" is satisfied.

Note that S0 is a reference point of S. In the case of DCI format 1_2, S0 is a start symbol of a PDCCH monitoring opportunity in which the DCI is detected. Otherwise, "S0 = 0."

<Regarding PUSCH Time Domain Resource Allocation>

The DCI for scheduling PUSCH includes a TDRA field indicating a row index. The terminal refers to, for example, a table in which the row index and information on the time domain resource allocation are associated with each other, based on the value of the row index of the TDRA field included in the DCI, and thus determines the time domain resource (PUSCH) allocated to the terminal.

The information included in the table (information on allocation of PUSCH) is indicated using, for example, higher layer signaling such as RRC. For example, the information included in the table is indicated using an IE such as a PUSCH-TimeDomainResourceAllocationList.

The information included in the table includes, for example, information indicating an offset from a slot in which the DCI is received to a slot to which PUSCH is allocated. The offset may be referred to as k2.

Further, the information included in the table includes information indicating a mapping type of PUSCH. Examples of the mapping types include, for example, type A and type B.

Furthermore, the information included in the table includes start symbol S of PUSCH and the number of consecutive symbols L of PUSCH. The S and L are, for example, indicated by the SLIV. The SLIV is represented by a value of, for example, 0 to 127. The SLIV is calculated based on the rules described below.

$$\text{if } (L\text{-}1) \leq 7 \text{ then}$$

$$SLIV = 14(L\text{-}1) + S$$

$$\text{else}$$

$$SLIV = 14(14\text{-}L\text{+}1) + (14\text{-}1\text{-}S)$$

Where $0 < L \leq 14\text{-}S$, S = Start Symbol Index, L = Number of Consecutive Symbols.

The terminal derives the S and L included in the table based on, for example, the SLIV indicated using higher layer signaling and the above rule.

Alternatively, the start symbol of PUSCH may be directly indicated by a start symbol field (starSymbol field) included in the DCI or RRC. The number of consecutive symbols of PUSCH may be directly indicated by a length field included in the DCI or RRC.

Note that, in PUSCH, S is based on the start point (first (initial) symbol) of the slot as a reference (reference point).

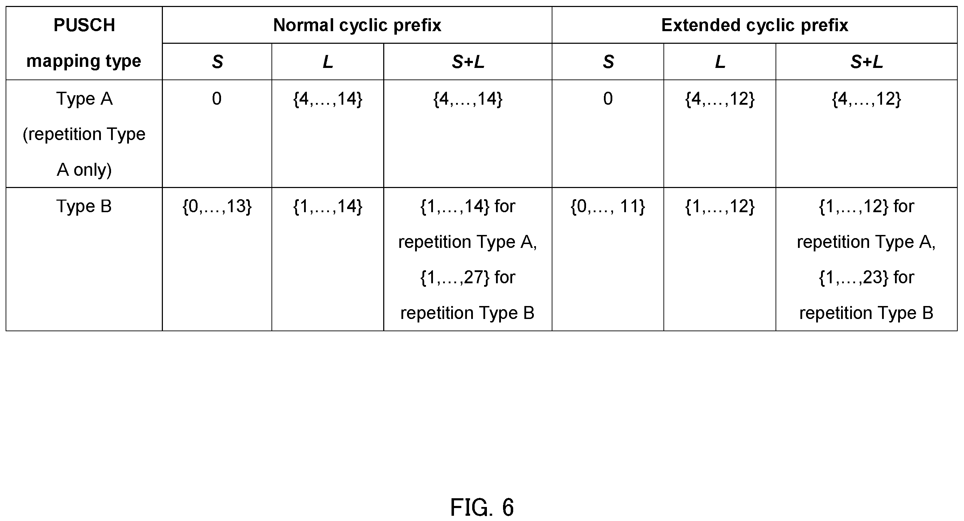

FIG. 6 illustrates other examples of start symbol S and the number of symbols L recognized by the UE as the valid PUSCH allocation (see Table 6.1.2.1-1 of NPL 2). As illustrated in FIG. 6, the values of S and L, which are recognized as the valid PUSCH allocation, may be indicated for each of at least one of the PUSCH mapping type and the CP length.

<Regarding Time Domain Resource for NCR>

The time domain resource for the NCR-Fwd may be indicated (allocated) to the NCR-Fwd in the SCI. In other words, for the NCR, the time domain resource that can be used by the NCR in the access link and/or the backhaul link may be indicated in the SCI. The time domain resource that can be used by the NCR in the access link and/or the backhaul link may be referred to as, for example, an applicable time domain resource.

The following signals may be allocated to the applicable time resource for the NCR-Fwd, for example.

- DL Tx beam/UL Rx beam indication in the access link for the NCR-Fwd
- DL Rx beam/UL Tx beam indication in the backhaul link for the NCR-Fwd
- ON-OFF indication on the NCR-Fwd
- DL-UL (TDD) indication on the NCR-Fwd

Note that, in the following, the applicable time domain resource for the NCR-Fwd may be referred to as ATDR. Further, in the following, the phrase "and/or" may be described as "/." The applicable time domain resource may be referred to as an appliable time domain resource. The time domain resource may be referred to as a time resource or a resource.

<Study 1>

In 3GPP, there is no specification on how to configure an SCS/CP of an ATDR (carrier or signal) when an NCR determines the ATDR for a NCR-Fwd. For this reason, the NCR may fail to forward a signal appropriately with the ATDR for the NCR-Fwd in some cases.

For example, there is no specification on how many SCSs are configured for the ATDR for the NCR-Fwd in the access link described in FIG. 4, and on whether to configure the CP to a normal CP or an extended CP. Further, for example, there is no specification on how many SCSs are configured for the ATDR for the NCR-Fwd in the backhaul link described in FIG. 4, and whether to configure the CP to a normal CP or an extended CP.

For this reason, in the SCS/CP for the ATDR for the NCR-Fwd, there may be a discrepancy between the SCS/CP recognized by the NCR based on the information of the NCR-MT and the SCS/CP used in the terminal/base station, resulting in failure of the NCR to forward a signal appropriately, for example.

Accordingly, Proposal 1 is provided below to enable the NCR to forward a signal appropriately.

<Proposal 1>

The NCR configures the SCS/CP for the ATDR for the NCR-Fwd based on the following Alt. 1 to Alt. 3. For example, the NCR configures the SCS/CP for the ATDR in the access link/backhaul link illustrated in FIG. 4 based on the following Alt. 1 to Alt. 3.

<Proposal 1-Alt.1>

The NCR assumes that the SCS/CP for the ATDR for the NCR-Fwd is the same as the SCS/CP for the NCR-MT. The term "assume" may be read as configure, grasp, understand, or determine.

For example, in a case where the SCS for the NCR-MT (carrier or signal in control link) illustrated in FIG. 4 is 15 kHz and the CP is a normal CP, the NCR assumes that the SCS for the ATDR for the NCR-Fwd is 15 kHz and the CP is a normal CP. Note that, the NCR may assume that the SCS/CP for the ATDR for the NCR-Fwd is the same as the SCS/CP for the SCI that has indicated the allocation of the ATDR for the NCR-Fwd.

In Proposal 1-Alt. 1, the following Alt. 1-1 to Alt. 1-3 are further provided.

<Proposal 1-Alt.1-Alt.1-1>

In a case where the NCR-MT has a plurality of serving cells/BWPs, the NCR assumes that the SCS/CP for the NCR-Fwd is the same as one of the serving cells/BWPs of the NCR-MT determined based on the pre-defined rule.

For example, the NCR assumes that the SCS/CP for the ATDR for the NCR-Fwd is the same as the SCS/CP for the serving cell/BWP with the smallest cell index of the NCR-MT.

For example, the NCR assumes that the SCS/CP for the ATDR for the NCR-Fwd is the same as the SCS/CP for the serving cell/BWP with the largest cell index of the NCR-MT.

For example, the NCR assumes that the SCS/CP for the ATDR for the NCR-Fwd is the same as the SCS/CP for the serving cell/BWP in an initial access such as a random access of the NCR-MT.

<Proposal 1-Alt.1-Alt.1-2>

In a case where the NCR-MT has the plurality of serving cells/BWPs, the NCR assumes that the SCS/CP for the NCR-Fwd is the same as that for the serving cell/BWP in which the SCI has been received.

For example, the NCR-MT of the NCR receives, in a serving cell with 15-kHz SCS and a normal CP, the SCI indicating to use beam #1 among a plurality of beams in DL of the access link. In this case, the NCR-Fwd of the NCR transmits beam #1 with the ATDR in the DL of the access link, for which the 15-kHz SCS and normal CP are configured.

<Proposal 1-Alt.1-Alt.1-3>

The NCR assumes that the SCS/CP in DL and UL for the ATDR for the NCR-Fwd is the same as the SCS/CP in DL and UL for the NCR-MT.

For example, in a case where the SCS in DL for the NCR-MT illustrated in FIG. 4 is 30 kHz and the CP is a normal CP, the NCR assumes that the SCS for the ATDR in DL for the NCR-Fwd is 30 kHz and the CP is a normal CP. Further, for example, in a case where the SCS in UL for the NCR-MT illustrated in FIG. 4 is 15 kHz and the CP is a normal CP, the NCR assumes that the SCS for the ATDR in UL for the NCR-Fwd is 15 kHz and the CP is a normal CP.

<Proposal 1-Alt.2>

The SCS/CP for the ATDR for the NCR-Fwd is pre-defined. For example, the SCS/CP for the ATDR for the NCR-Fwd is pre-defined by the specifications.

For example, 15 kHz is pre-defined as the SCS for the ATDR for the NCR-Fwd. As the CP for the ATDR for the NCR-Fwd, a normal CP is pre-defined.

The SCS/CP for the ATDR for the NCR-Fwd may be pre-defined with different values depending on the FR. For example, in FR1, the SCS for the ATDR for the NCR-Fwd is pre-defined as 15 kHz. For example, in FR2, the SCS for the ATDR for the NCR-Fwd is pre-defined as 60 kHz.

<Proposal 1-Alt.3>

The SCS/CP for the ATDR for the NCR-Fwd is configured semi-statically/indicated dynamically in the SCI.

For example, the SCS/CP for the ATDR in a Synchronization Signal Block (SSB), a PDCCH monitoring occasion, or a RACH occasion in UL is configured semi-statically in the SCI of higher layer signaling such as RRC and/or MAC CE. For example, the SCS/CP for the ATDR in PDSCH/PUSCH is dynamically indicated in the SCI of lower layer signaling such as DCI.

In a case where the SCS/CP is not configured/indicated in the SCI, the NCR may apply "Proposal 1-Alt.1" or "Proposal 1-Alt.2."

<Summary of Proposal 1>

As described above, the SCS/CP for the ATDR for the NCR-Fwd is assumed to be the same as the SCS/CP for the NCR-MT. Alternatively, the SCS/CP for the ATDR for the NCR-Fwd is pre-defined. Alternatively, the SCS/CP for the ATDR for the NCR-Fwd is configured semi-statically and/or indicated dynamically in the SCI.

This configuration suppresses the discrepancy between the SCS/CP for the ATDR for NCR-Fwd and the SCS/CP for the base station/terminal, thereby enabling the NCR to forward the signal appropriately.

<Examination 2>

In 3GPP, it is not specified in which slot the ATDR for the NCR-Fwd is included (allocated or configured). For this reason, the NCR may fail to forward a signal appropriately with the ATDR for the NCR-Fwd in some cases.

Accordingly, Proposal 2.1 is provided below to enable the NCR to forward a signal appropriately.

Further, in a case where a slot including the ATDR for the NCR-Fwd is indicated in plurality using (via) SCI, it is important to reduce overhead of the SCI.

Accordingly, Proposal 2.2 is provided below to reduce the overhead of the SCI.

<Proposal 2.1>

In Proposal 2.1, it is assumed that the ATDR for the NCR-Fwd is included (allocated or configured) in one slot. The slot in which the ATDR for the NCR-Fwd is included is indicated based on the following Options 1 and 2.

<Proposal 2.1-Option 1>

A slot index for the ATDR for the NCR-Fwd is indicated as an offset for the slot that carries the SCI.

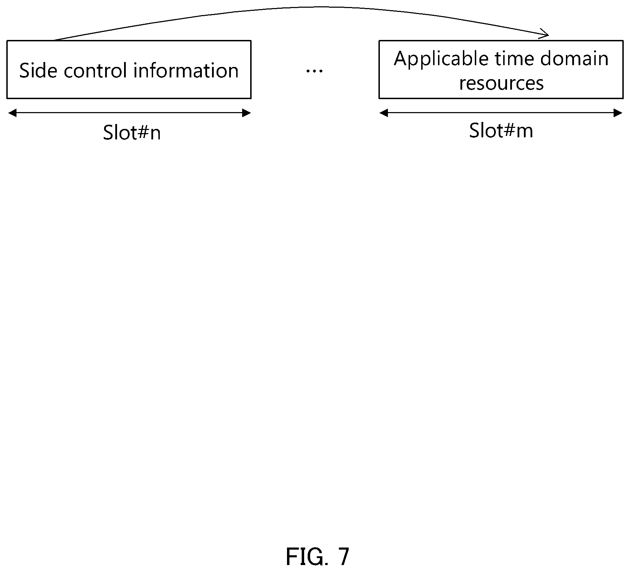

FIG. 7 is a diagram for describing Proposal 2.1-Option 1. As illustrated in FIG. 7, the slot index (number) of the slot that carries the SCI is referred to as "#n." In other words, the index (number) of the slot with the SCI received by the NCR-MT is referred to as "#n."

The SCI carried in the slot with slot index "#n" includes "k" as an offset indicating a slot including the ATDR.

In this case, the ATDR for the NCR-Fwd is included in the slot with slot index "#n+k." For example, "#m" illustrated in FIG. 7 is "#m = #n+k."

That is, the NCR determines the slot including the ATDR for the NCR-Fwd based on the slot index of the slot in which the SCI has been received and the offset included in the received SCI. For example, the NCR includes the ATDR for the NCR-Fwd in a slot after the offset included in the received SCI from the slot in which the SCI has been received.

<Proposal 2.1-Option 1-Variation>

In Proposal 1, the SCS for the carrier on which the NCR-MT receives the SCI and the SCS for the carrier to which the NCR-Fwd performs the forwarding may be different from each other. In a case where the SCS for the carrier in which the NCR-MT receives the SCI and the SCS for the carrier to which the NCR-Fwd performs the forwarding are different from each other, the ATDR of for the NCR-Fwd is included in the slot with the slot index indicated in the following Expression 1.
[1]

$$\left\lfloor n \cdot \frac{2^{u\_Fwd}}{2^{u\_SCI}} \right\rfloor + k \qquad \text{... (Expression 1).}$$

Here, u_SCI is the SCS (SCS configuration) for the carrier on which the NCR-MT has received the SCI. u_Fwd is the SCS (SCS configuration) for the carrier to which the NCR-Fwd performs forwarding.

For example, the NCR causes the ATDR for the NCR-Fwd to be included in a slot with a slot index after taking into account an offset indicated in the SCI, in a slot of a carrier to which the NCR-Fwd performs the forwarding after the slot in which the SCS has been received.

<Proposal 2.1-Option 2>

A slot index of the ATDR for the NCR-Fwd is directly indicated as a periodic slot index. The period may be pre-defined, for example. Alternatively, the period may be configured/indicated using the SCI.

The units of the periods may be in slots unit or in subframes. Further, the units of the periods may be in milliseconds or in seconds. In a case where the number of slots in the period is P, candidate values for the slot index are from 0 to P-1.

<Summary of Proposal 2.1>

As described above, the slot index of the ATDR for the NCR-Fwd is indicated as an offset from the slot in which the SCI is carried. Alternatively, the slot index of the ATDR for the NCR-Fwd is directly indicated as a periodic slot index.

This configuration enables the NCR to determine appropriately the slot to which the ATDR for the NCR-Fwd is allocated and to forward a signal appropriately.

Note that the slot for which the ATDR for the NCR-Fwd is configured may be indicated using an absolute value index such as a physical slot index, rather than an offset.

<Proposal 2.2>

In Proposal 2.2, it is assumed that the ATDR for the NCR-Fwd is included in a plurality of slots.

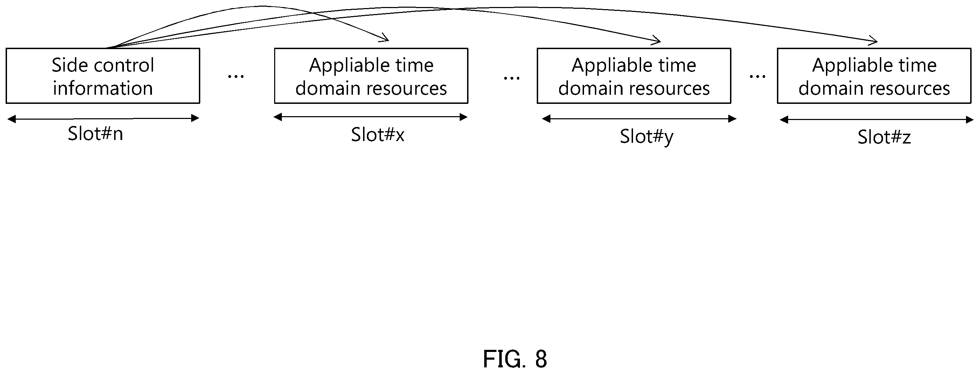

FIG. 8 is a diagram for describing Proposal 2.2. In the example of FIG. 8, the ATDR for the NCR-Fwd is included in three slots.

The plurality of slots including the ATDR for the NCR-Fwd are indicated using the SCI. For example, slots "#x," "#y," and "#z" including the ATDR illustrated in FIG. 8 are indicated using the SCI in slot "#n."

The SCI includes a list index. The plurality of slots including the ATDR for the NCR-Fwd are indicated using the list index included in the SCI. The SCI may be indicated, for example, by lower layer signaling such as the DCI or higher layer signaling such as the MAC CE.

For example, the NCR refers to a list (table) in which a list index and the plurality of slots including the ATDR of for the NCR-Fwd are associated with each other, based on the list index indicated using the SCI, and thus determines the slot for the ATDR.

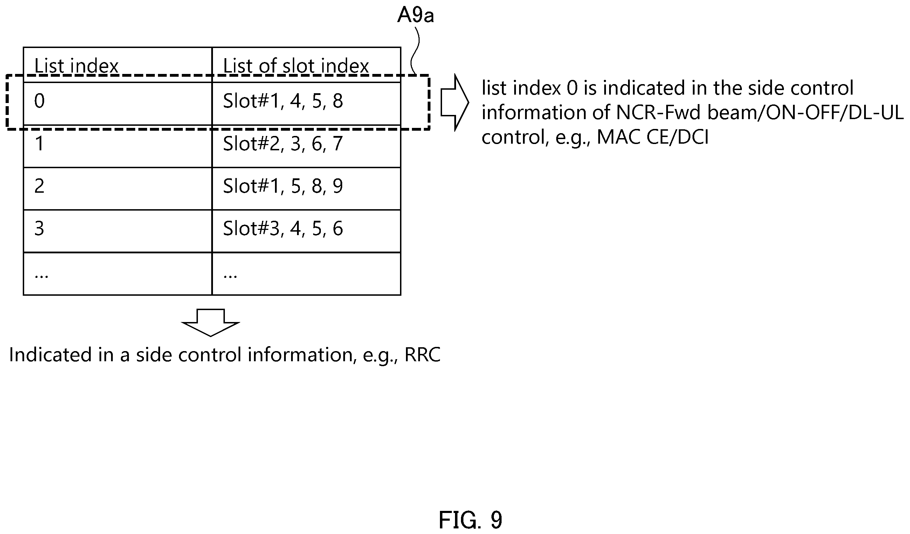

FIG. 9 is another diagram for describing Proposal 2.2. As illustrated in FIG. 9, the list associates a list index with a plurality of slot indices. The NCR refers to the list illustrated in FIG. 9 based on the list index indicated using the SCI, and thus determines the slot for the ATDR.

For example, suppose that the list index "0" is indicated using the SCI to the NCR. In this case, the NCR determines the slots with slot indices "#1," "#4," "#5," and "#8" as the slots to which the ATDR is allocated, as indicated by dotted line frame A9a in FIG. 9.

The list illustrated in FIG. 9 is indicated using the SCI, for example. The SCI may be indicated by, for example, higher layer signaling such as RRC. The slot index for each list may be indicated as Proposal 2-1. For example, the "List of slot index" illustrated in FIG. 9 may be indicated as Proposal 2-1.

The SCI may be an SCI for NCR-Fwd beam/NCR-Fwd ON-OFF/NCR-Fwd DL-UL control. The ATDR for NCR-Fwd beam/NCR-Fwd ON-OFF/NCR-Fwd DL-UL is determined based on a list and a list index included in the SCI. A list of a plurality of slot indices acquired using the list (slot) is an ATDR for the SCI.

<Summary of Proposal 2.2>

As described above, the NCR refers to a list in which a list index and a plurality of slots to which the ATDR for the NCR-Fwd is allocated are associated with each other, based on the list index indicated using the SCI, and thus determines the slot for the ATDR.

This configuration makes it possible to reduce the overhead of the SCI. For example, the NCR can determine a plurality of slots including the ATDR for the NCR-Fwd using one list index without using a plurality of slot indices, and thus, the overhead of the SCI can be reduced.

<Examination 3>

In 3GPP, it is not specified from which symbol the ATDR for the NCR-Fwd starts.

Further, no limitation (condition) is specified for a valid combination of a start symbol and consecutive symbols of the ATDR for the NCR-Fwd. For this reason, the NCR may fail to forward the signal appropriately with the ATDR for the NCR-Fwd in some cases.

Accordingly, Proposal 3.1 and Proposal 3.2 are provided below to enable the NCR to forward a signal appropriately.

<Proposal 3.1>

When the symbol information in each slot is indicated, the position of the first symbol of the ATDR for the NCR-Fwd is indicated to the NCR.

The SLIV (start symbol S and number of consecutive symbols L) of the ATDR for the NCR-Fwd is calculated based on the rule described below.

$$\text{if } (L\text{-}1) \leq 7 \text{ then}$$

$$SLIV = 14(L\text{-}1) + S$$

$$\text{else}$$

$$SLIV = 14(14\text{-}L\text{+}1) + (14\text{-}1\text{-}S)$$

Where $0 < L \leq 14\text{-}S$, S = Start Symbol Index, L = Number of Consecutive Symbols.

That is, the same rule as for the SLIV in PDSCH and PUSCH of the terminal (for example, see sec. 5.1.2.1/sec. 6.1.2.1 of NPL 2) may be used for the SLIV of the ATDR for the NCR-Fwd.

A reference point of start symbol S of the ATDR for the NCR-Fwd is determined based on the following Options 1 and 2.

<Proposal 3.1-Option 1>

The reference point of start symbol S of the ATDR for the NCR-Fwd is a start point of a slot. In other words, the reference point of start symbol S of the ATDR for the NCR-Fwd is the first symbol of the slot to which the ATDR is allocated. For example, S0 = 0.

<Proposal 3.1-Option 2>

The reference point of start symbol S of the ATDR for the NCR-Fwd is a start symbol or an end symbol (last symbol) of a channel (signal) on which the SCI for the NCR-Fwd beam/NCR-Fwd ON-OFF/NCR-Fwd DL-UL control has been carried. The channel may be, for example, PDCCH/PDSCH. For example, when the start symbol of PDCCH (DCI) that has carried the SCI is "3," S0 = 3.

<Summary of Proposal 3.1>

As described above, the start symbol and the consecutive number of the ATDR for the NCR-Fwd are determined based on a predetermined rule such as SLIV.

This configuration enables the NCR to determine the start symbol and the consecutive number of the ATDR for the NCR-Fwd and to forward a signal appropriately.

<Proposal 3.2>

The NCR configures a symbol for the ATDR for the NCR-Fwd using the S and L. The SLIV of the ATDR for the NCR-Fwd is calculated based on the rule described in Proposal 3.1. In Proposal 3.2, the NCR takes the following conditions as valid combinations of the S and L. In other words, the NCR determines a combination of the S and L that satisfies the following conditions as a valid combination of the S and L.

- Condition 1

S is assumed to satisfy "$X \leq S \leq Y$."

Here, X and Y may be pre-defined values. Alternatively, a set of candidate values for S may be pre-defined. Condition 1 may reuse the table for PDSCH/PUSCH scheduling in Rel-17 (see, for example, FIGS. 5 and 6).

- Condition 2

L is assumed to satisfy "$M \leq L \leq N$."

Here, M and N may be pre-defined values. Alternatively, a set of candidate values for L may be pre-defined. Condition 2 may reuse the table for the PDSCH/PUSCH scheduling in Rel-17 (see, for example, FIGS. 5 and 6).

- Condition 3

S0+S+L is assumed to satisfy "$A \leq S0\text{+}S\text{+}L \leq B$."

Here, A and B may be pre-defined values. Alternatively, a set of candidate values for "S0+S+L" may be pre-defined.

S0 is, for example, a reference point of S described in Proposal 3.1. S0 may be 0. Condition 3 may reuse the limitations for the PDSCH/PUSCH scheduling in Rel-17 (see, for example, FIGS. 5 and 6). Note that the consecutive number of symbols cannot cross a slot boundary.

- Condition 4

S+L is assumed to satisfy "$J \leq S\text{+}L \leq K$."

Here, J and K may be pre-defined values. Alternatively, a set of candidate values for "S+L" may be predefined. Condition 4 may reuse the table for the PDSCH/PUSCH scheduling in Rel-17 (see, for example, FIGS. 5 and 6).

<Summary of Proposal 3.2>

As described above, the start symbol and the consecutive number of the ATDR for the NCR-Fwd are given a limitation on valid combinations.

This configuration enables the NCR to determine the start symbol and the consecutive number of the ATDR for the NCR-Fwd and to forward a signal appropriately.

<Examination 4.1>

In the PDDCH/PUSCH scheduling, repetition of PDDCH/PUSCH is configured/indicated.

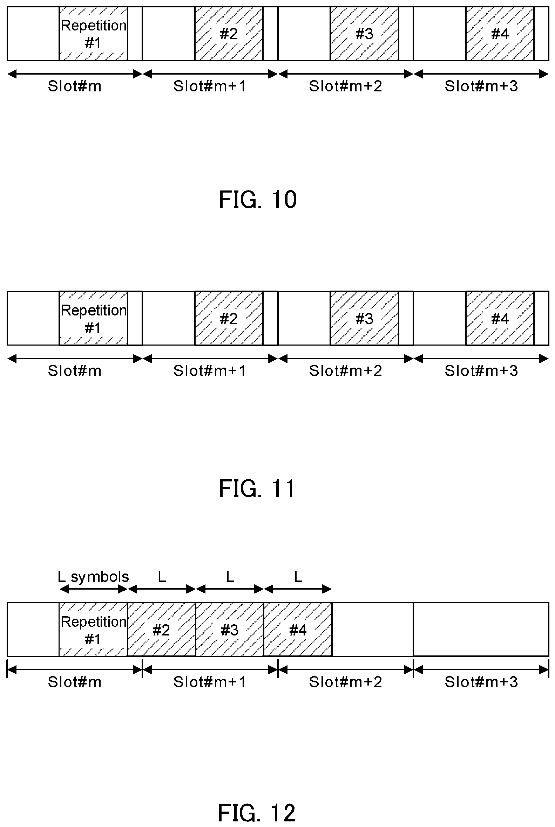

FIG. 10 is a diagram for describing the repetition of PDSCH. In a case where the number of repetitions is K, PDSCH is repeated in K consecutive slots.

For example, in a case where the number of repetitions is "4," as illustrated in FIG. 10, PDSCH is repeated in four consecutive slots of slot numbers "#m," "#m+1," "#m+2," and "#m+3." The repetitions in the respective slots (hatched portions illustrated in FIG. 10) have the same start symbol and the same number of symbols.

The repetition of PUSCH includes Repetition Type A and Repetition Type B.

FIG. 11 is a diagram for describing repetition Type A of PUSCH. In Repetition Type A, PUSCH is repeated in K consecutive slots when the number of repetitions is K.

For example, in a case where the number of repetitions is "4," PUSCH is repeated in four consecutive slots of slot numbers "#m," "#m+1," "#m+2," and "#m+3" as illustrated in FIG. 11. The repetitions in the respective slots (hatched portions illustrated in FIG. 11) have the same start symbol and the same number of symbols. That is, repetition type A of PUSCH performs the repetition consecutively in slot units.

FIG. 12 is a diagram for describing repetition type B of PUSCH. In repetition type B, PUSCH is repeated in K*L consecutive symbols when the number of repetitions is K. Here, L is the number of symbols in each repetition.

For example, in a case where the number of repetitions is "4," PUSCH is repeated four times in 4*L consecutive symbols as illustrated in FIG. 12. That is, repetition type B of PUSCH is performed in consecutive symbols.

In 3GPP, repetition is specified for PUSCH/PDSCH, PUCCH, and the like to achieve coverage enhancement, and since the NCR is also required to perform an operation supporting the repetition in the ATDR for the NCR-Fwd, Proposal 4.1 is provided below.

<Proposal 4.1>

The NCR configures the ATDR for the NCR-Fwd in accordance with the repetition of PUSCH/PDSCH.

An indication of NCR-Fwd beam/NCR-Fwd ON-OFF/NCR-Fwd DL-UL is applied to the ATDR including K repetitions. In other words, K repetitions are applied to the ATDR for the NCR-Fwd in K consecutive slots.

In Proposal 4.1, the following Options 1 and 2 are provided.

<Proposal 4.1-Option 1>

The NCR assumes a slot-based repetition. The K repetitions are performed in K consecutive slots. In other words, the repetition for the ATDR for the NCR-Fwd is performed consecutively in slot units.

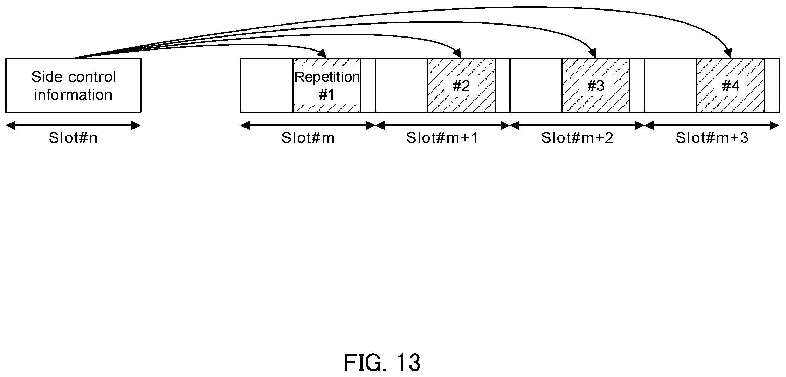

FIG. 13 is a diagram for describing Proposal 4.1-Option 1. The ATDR for the NCR-Fwd is repeated in K consecutive slots when the number of repetitions is K. K is indicated to the NCR semi-statically/dynamically using the SCI, for example. By way of example, K is indicated to the NCR semi-statically/dynamically using one SCI in slot #n illustrated in FIG. 10.

For example, in a case where the number of repetitions is "4," as illustrated in FIG. 13, the NCR repeats the ATDR for the NCR-Fwd four times in four consecutive slots with slot numbers "#m," "#m+1," "#m+2," and "#m+3." That is, the NCR performs the repetition for the ATDR for the NCR-Fwd consecutively in slot units. The repetitions in the respective slots (hatched portions illustrated in FIG. 13) have the same start symbol and the same number of symbols.

The slot for the first repetition may be indicated, for example, by the method described in Proposal 2.1 or Proposal 2.2. The S and L for each repetition in the slots may be indicated by the method described in Proposal 3.1 or Proposal 3.2.

<Proposal 4.1-Option 2>

The NCR assumes a sub-slot-based repetition. The K repetitions are performed in K*L consecutive symbols. L is the number of symbols in each repetition (one repetition). In other words, K repetitions are applied to K*L consecutive symbols for the ATDR for the NCR-Fwd.

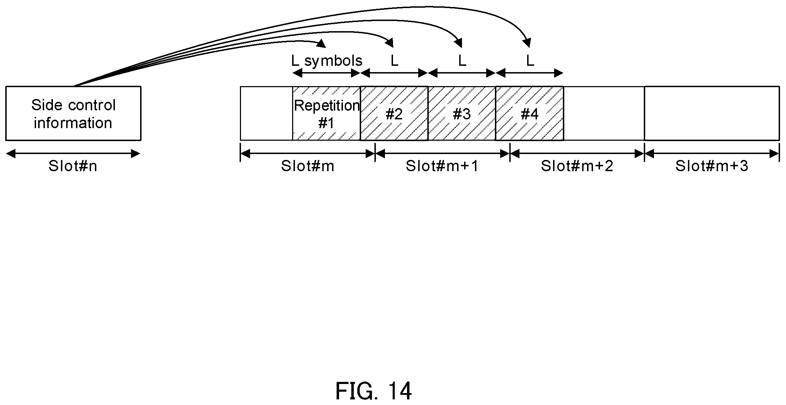

FIG. 14 is a diagram for describing Proposal 4.1-Option 2. The ATDR for the NCR-Fwd is repeated in K*L consecutive slots when the number of repetitions is K. K and L are indicated to the NCR semi-statically/dynamically using the SCI, for example.

For example, in a case where the number of repetitions is "4," as illustrated in FIG. 14, the NCR repeats the ATDR for the NCR-Fwd four times in consecutive 4*L symbols. That is, the NCR performs the repetition for the ATDR for the NCR-Fwd in consecutive symbols. Each repetition has the same number of symbols.

The number L of symbols in each repetition may be indicated, for example, by the method described in Proposal 3.1 or Proposal 3.2. The first slot of the repetition may be indicated, for example, by the method described in Proposal 2.1 or Proposal 2.2. The start symbol of the repetition may be indicated, for example, by the method described in Proposal 3.1 or Proposal 3.2.

<Summary of Proposal 4.1>

As described above, the NCR executes the repetition in the ATDR for the NCR-Fwd based on the information indicated using the SCI.

This configuration enables the NCR to achieve the coverage enhancement for the ATDR for the NCR-Fwd.

<Examination 4.2>

In Rel-17, TB processing over multi-slot (TBoMS) has been introduced for PUSCH coverage enhancement. In the TBoMS, one transport block (TB) is transmitted using multiple slots. For example, in a case where the number of slots used for determining the transport block size (TBS) is configured/indicated as N, the TB is transmitted over N consecutive slots.

In a case where the repetition is configured/indicated together with the TBoMS, each repetition is composed by the N consecutive slots. In a case where the number of repetitions is K, the total number of slots for the PUSCH repetition is K*N consecutive slots.

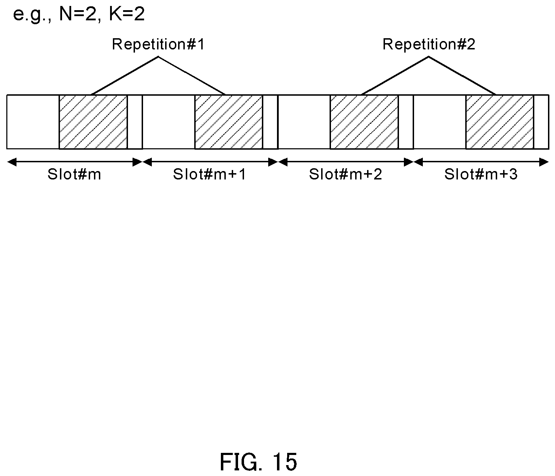

FIG. 15 is a diagram for describing the repetition and the TBoMS. FIG. 15 illustrates an example of N = 2 and K = 2. For example, one TB is transmitted via PUSCH of two slots, #m and #m+1 (N = 2). The transmission of the TB is repeated twice with #m and #m+1, and with #m+2 and #m+3 (K = 2).

In a case where the repetition and the TBoMS are configured/indicated, the same start symbol and the same number of symbols are applied to the K*N consecutive slots. For example, PUSCHs in the respective slots (hatched portions in FIG. 15) have the same start symbol and the same number of symbols.

In 3GPP, the TBoMS is specified for PUSCH to achieve coverage enhancement, and since the NCR is also required to perform an operation supporting the TBoMS in the ATDR for the NCR-Fwd, Proposal 4.2 is provided below.

<Proposal 4.2>

The NCR configures the ATDR for the NCR-Fwd for K*N consecutive slots, assuming the TBoMS of PUSCH.

The indication of the NCR-Fwd beam/NCR-Fwd ON-OFF/NCR-Fwd DL-UL is applied to an ATDR composed of K repetitions in N consecutive slots. In other words, for the ATDR for the NCR-Fwd, K repetitions are applied to N consecutive slots.

The total number of slots for ATDR for the NCR-Fwd is K*N slots. Each of the K*N slots is consecutive, and the same start symbol and the same number of symbols are applied to the consecutive K*N slots.

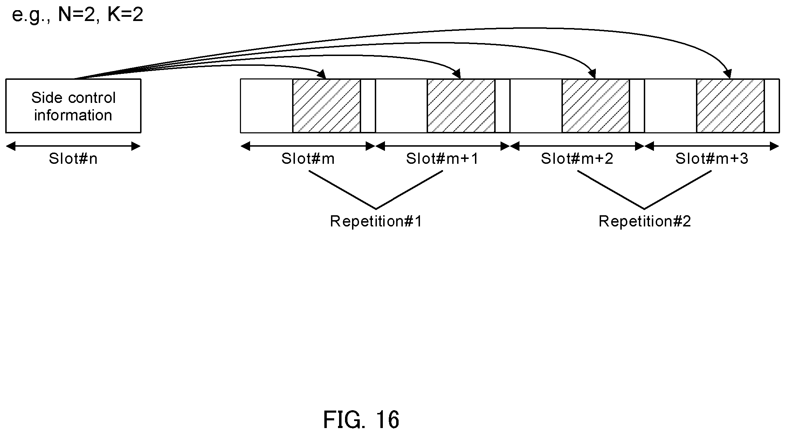

FIG. 16 is a diagram for describing Proposal 4.2. The ATDR for the NCR-Fwd is repeated in N*K consecutive slots in a case where the number of repetitions is K and the number of consecutive slots for the TBoMS is N.

FIG. 16 illustrates an example of N = 2 and K = 2. For example, one TB is transmitted in two slots, #m and #m+1 (N = 2). The transmission of the TB is repeated twice with #m and #m+1, and with #m+2 and #m+3 (K = 2). Accordingly, the ATDR for the NCR-Fwd is allocated to 2*2 consecutive slots.

A slot index of the first slot of a case where the repetition and the TBoMS are applied to the TDRA for the NCR-Fwd may be indicated by, for example, the method described in Proposal 2.1 or Proposal 2.2. The start symbol and the number of symbols in each slot of a case where the repetition and the TBoMS are applied to the TDRA for the NCR-Fwd may be indicated by, for example, the method described in Proposal 3.1 or Proposal 3.2.

K is indicated to the NCR semi-statically/dynamically using the SCI, for example. In a case where K is not configured/indicated using the SCI, the NCR may determine the value of K to be one. In a case where K = 1 and N ≥ 2, the NCR may interpret that no repetition is applied to the TDRA for the NCR-Fwd and the TBoMS is applied.

N is indicated to the NCR semi-statically/dynamically using the SCI, for example. In a case where N is not configured /indicated using the SCI, the NCR may determine the value of N to be one. In a case of K ≥ 2 and N = 1, the NCR may interpret that the repetition is applied to the TDRA for the NCR-Fwd and no TBoMS is applied.

K*N may be indicated as one parameter.

<Summary of Proposal 4.2>

As described above, the NCR executes the repetition and the TBoMS for the ATDR for the NCR-Fwd based on the information indicated using the SCI.

This configuration enables the NCR to achieve coverage enhancement in the ATDR for the NCR-Fwd. Note that, the NCR may execute the TBoMS alone without performing the repetition for the ATDR for the NCR-Fwd.

<Examination 4.3>

In Rel-17, available slot counting has been introduced for PUSCH coverage enhancement.

For example, in a case where at least one symbol in a certain slot overlaps with a DL symbol, the certain slot is not used as a slot for PUSCH for the repetition/TBoMS.

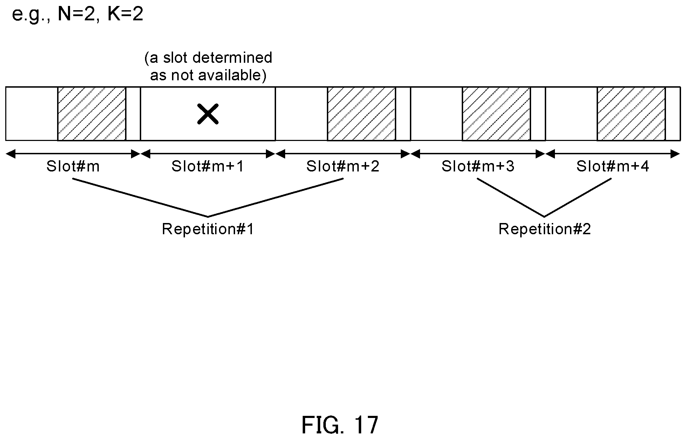

FIG. 17 illustrates the available slot counting. FIG. 17 illustrates an example of N=2 and K = 2.

For example, in slot #m+1 illustrated in FIG. 17, at least one symbol overlaps with a DL symbol. In this case, slot #m+1 is not used as a slot for PUSCH for the repetition/TBoMS.

Note that a symbol in slot #m+1 is indicated in an index row of a resource allocation table. The DL symbol is indicated, for example, by an RRC parameter of tdd-UL-DL-ConfigurationCommon or tdd-UL-DL-Configuration-Dedicated. The DL symbol may be a symbol of an SS/PBCH block with an index provided by ssb-PositionsInBurst.

3GPP does not specify the available slot counting in an NCR-Fwd of an NCR. For this reason, the NCR cannot achieve coverage enhancement for the ATDR for the NCR-Fwd.

Accordingly, Proposal 4.3 is provided below to enable the NCR to achieve coverage enhancement for the ATDR for the NCR-Fwd.

<Proposal 4.3>

The NCR configures the ATDR for the NCR-Fwd for consecutive UL slots, assuming the available slot counting for PUSCH and PUSCH.

A TDRA for the NCR-Fwd beam/NCR-Fwd ON-OFF/NCR-Fwd DL-UL control is indicated as X slot/X symbol. In a UL operation of the NCR-Fwd, when at least one symbol in the indicated slot or at least one symbol of the indicated symbols overlaps with a DL symbol, the NCR does not count the overlapping slot or symbol in the number of slots or symbols for the ATDR for the NCR-Fwd beam/NCR-Fwd ON-OFF/NCR-Fwd DL-UL. In other words, the NCR includes the ATDR for the NCR-Fwd in consecutive UL slots or UL symbols, not in consecutive slots or symbols.

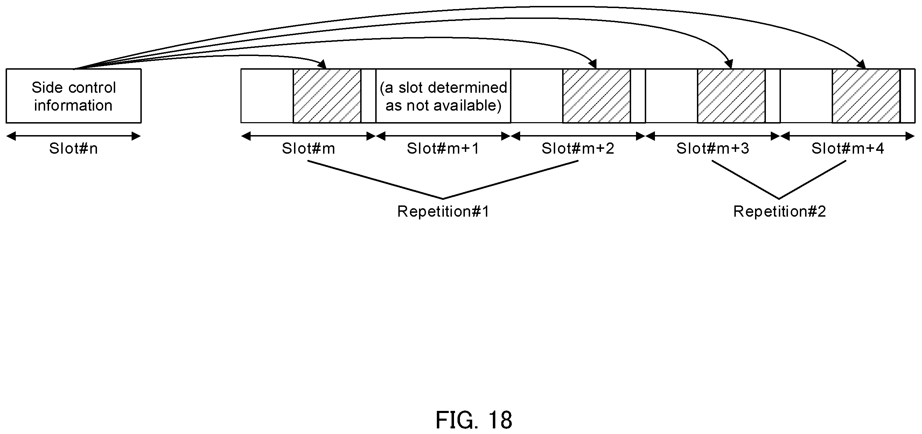

FIG. 18 is a diagram for describing Proposal 4.3. FIG. 18 illustrates an example of N = 2 and K = 2. K and N are indicated to the NCR using, for example, the SCI.

For example, at least one symbol in slot #m+1 illustrated in FIG. 18 overlaps with a DL symbol. In this case, the NCR does not use slot #m+1 as a slot for the repetition/TBoMS. The NCR includes, for example, the ATDR for the NCR-Fwd in the slots of "#m+1," "#m+2," "#m+3," and "#m+4" as illustrated in the hatching of FIG. 18.

The DL symbol may be indicated to the NCR-MT by an RRC parameter such as tdd-UL-DL-ConfigurationCommon or tdd-UL-DL-ConfigurationDedicated.

The DL symbol may be a symbol of an SSB provided to the NCR-MT with an index by an RRC parameter such as ssb-PositionInBurst.

The DL symbol may be a symbol of another DL signal/channel of the NCR-MT, such as PDSCH/PDCCH/CSI-RS of the NCR-MT.

The DL symbol may be indicated by a new SCI used for a TDD (UL/DL) indication for an NCR-Fwd operation.

The above description has been given for the UL operation, but the same applies to a DL operation. For example, in the DL operation of the NCR-Fwd, when at least one symbol in the indicated slot or at least one symbol of the indicated symbols overlaps with a UL symbol, the NCR does not count the overlapping slot or symbol in the number of slots or symbols for the ATDR for the NCR-Fwd beam/NCR-Fwd ON-OFF/NCR-Fwd DL-DL. In other words, the NCR includes the ATDR for the NCR-Fwd in consecutive DL slots or DL symbols, not in consecutive slots.

The UL symbol may be indicated to the NCR-MT by an RRC parameter such as tdd-UL-DL-ConfigurationCommon or tdd-UL-DL-ConfigurationDedicated.

The UL symbol may be a symbol of another UL signal/channel of the NCR-MT, such as PUSCH/PUCCH/SR/PRACH of the NCR-MT.

The UL symbol may be indicated by a new SCI used for a TDD (UL/DL) indication for the NCR-Fwd operation.

The operation of Proposal 4.3 may be enabled by a semi-static/dynamic indication. For the semi-static/dynamic indication, the SCI may be used.

In a case where the operation of Proposal 4.3 is enabled, the K consecutive slots in Proposal 4.1 are replaced with K slots, K UL slots, or K DL slots. The K*L consecutive symbols in Proposal 4.1 are replaced with K*L symbols, K*L UL symbols, or K*L DL symbols.

In a case where the operation of Proposal 4.3 is enabled, the N consecutive slots in Proposal 4.2 are replaced with N slots, N UL slots, or N DL slots. The K*N consecutive slots in Proposal 4.2 are replaced with K*N slots, K*N UL slots, or K*N DL slots.

<Summary of Proposal 4.3>

As described above, in the operation of UL repetition/TBoMS, the NCR does not configure the ATDR in a slot or symbol for which the ATDR for the NCR-Fwd is configured overlaps with a DL symbol. In the operation of DL repetition/TBoMS, when a slot or symbol for which the ATDR of NCR-Fwd is configured overlaps with a UL symbol, the NCR does not configure the ATDR in this slot or symbol.

This configuration enables the NCR to perform coverage enhancement for the ATDR for the NCR-Fwd appropriately.

<Examination 5.1>

As described in the above "PDSCH time domain resource allocation" and "PUSCH time domain resource allocation," the TDRA table in the PDSCH/PUSCH schedule is configured by higher layer signaling such as RRC. Each row of the TDRA table includes parameters such as a slot index, a start symbol, and the number of symbols. The row index is indicated by the DCI for scheduling PDSCH/PUSCH.

3GPP has no specification nor definition of parameters such as the slot index, start symbol, and number of symbols for the ATDR for the NCR-Fwd. For this reason, the NCR may fail to forward a signal appropriately with the ATDR for the NCR-Fwd.

Accordingly, Proposal 5.1 is provided below to enable the NCR to forward a signal appropriately.

<Proposal 5.1>

A TDRA table (parameters) for configuration of the ATDR for the NCR-Fwd, such as the start symbol, the number of symbols, and the repetition is indicated to the NCR, using the SCI. Configuration (allocation) of the ATDR for the NCR-Fwd is indicated to the NCR, using the SCI.

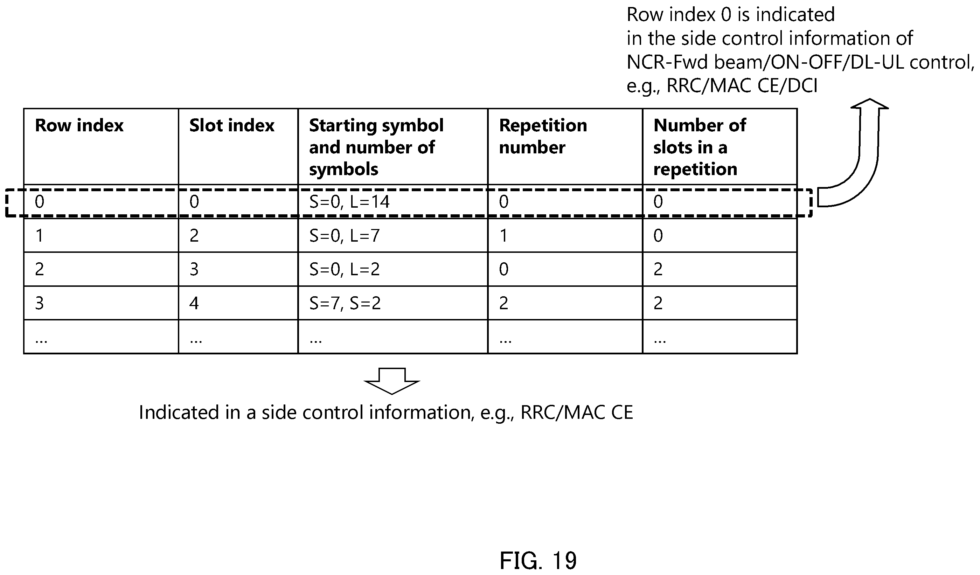

FIG. 19 illustrates an example of the TDRA table. As illustrated in FIG. 19, the TDRA table for the ATDR for the NCR-Fwd has a row index. The TDRA table includes a slot index associated with the row index, a start symbol and a number of symbols, a number of repetitions, and a number of slots for the repetition. The parameters in the TDRA table are indicated to/configured for the NCR using higher layer signaling such as RRC/MAC CE.

The TDRA table may include the slot index described in Proposal 2.1 or Proposal 2.2. The TDRA table may include the start symbol and the number of symbols described in Proposal 3.1 or Provision 3.2. The TDRA table may include the number of repetitions described in Proposal 4.1. The TDRA table may include the number of slots for each repetition described in Proposal 4.2.

The NCR refers to the TDRA table based on the row index included in the SCI on the NCR-Fwd beam/NCR-Fwd ON-OFF/NCR-Fwd DL-UL control, and determines the ATDR to which the NCR-Fwd beam/NCR-Fwd ON-OFF/NCR-Fwd DL-UL is allocated. That is, the NCR-Fwd beam/NCR-Fwd ON-OFF/NCR-Fwd DL-UL is applied to the ATDR corresponding to the row index indicated in the SCI. The SCI including the row index for referring to the TDRA table is indicated by lower layer signaling such as the DCI or higher layer signaling such as RRC/MAC CE.

Note that the TDRA table may include some of the parameters described above. Some parameters need not be supported, required, or provided (indicated/-configured).

The TDRA table may be provided with some of the parameters described above. A parameter that is not provided may be directly indicated using the SCI. For example, the parameter that is not provided may be directly indicated using the SCI on the NCR-Fwd beam/NCR-Fwd ON-OFF/NCR-Fwd DL-UL control. Alternatively, the parameter that is not provided may be indicated using another SCI different from the SCI on the NCR-Fwd beam/NCR-Fwd ON-OFF/NCR-Fwd DL-UL control. Alternatively, the parameter that is not provided may be pre-defined by specifications, for example.

The parameters in the TDRA table are not limited to the above parameters. The TDRA table may have other parameters.

<Summary of Proposal 5.1>

As described above, the NCR is provided with the table including parameters such as a slot index, a start symbol, and the number of symbols of the ATDR for the NCR-Fwd. The NCR refers to the table using the indicated row index and configures the ATDR for the NCR-Fwd.

This configuration enables the NCR to forward a signal appropriately with the ATDR for the NCR-Fwd. Further, the NCR refers to the table using the indicated row index and configures the ATDR for the NCR-Fwd, thereby reducing the overhead for configuring the ATDR for the NCR-Fwd.

<Examination 5.2>

In Rel-17 B52 (beyond 52GHz), multi-PDSCH/multi-PUSCH scheduling have been introduced.

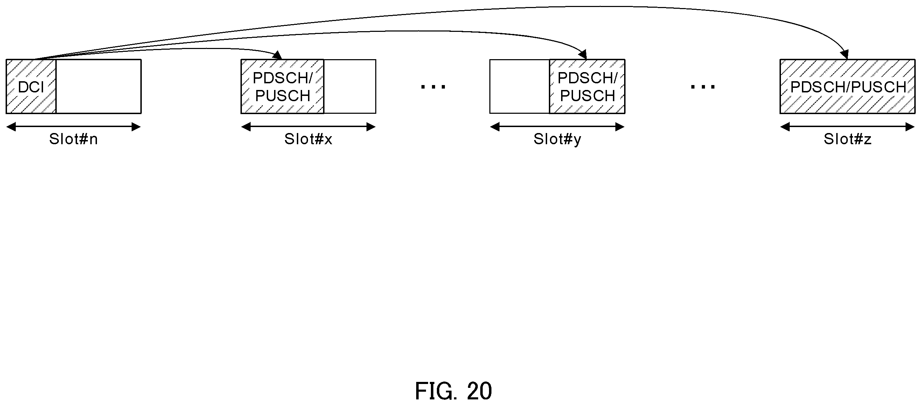

FIG. 20 is a diagram for describing multi-PDSCH/multi-PUSCH. In multi-PDSCH/multi-PUSCH, a plurality of PDSCHs/PUSCHs are scheduled by one DCI. For example, as illustrated in FIG. 20, the DCI in slot "#n" schedules PDSCH/PUSCH in a plurality of slots "#x," "#y," and "#z."

Each row of the TDRA table includes, for example, a plurality of combinations (parameters) of a slot offset, a start symbol and a symbol location, the number of repetitions, and a mapping type, for example. The parameters are applied to each PDSCH/PUSCH.

In 3GPP, technologies such as multi-PDSCH/multi-PUSCH are not specified for the ATDR for the NCR-Fwd. For this reason, the NCR may fail to forward a signal with the ATDR for the NCR-Fwd in some cases.

Accordingly, Proposal 5.2 is provided below to enable the NCR to forward a signal appropriately.

<Proposal 5.2>

A plurality of slots in which the ATDR for the NCR-Fwd is configured, and the start symbol and the number of symbols in each of the plurality of slots are indicated to the NCR, using one SCI. The SCI is indicated by, for example, higher layer signaling such as MAC CE or lower layer signaling such as DCI.

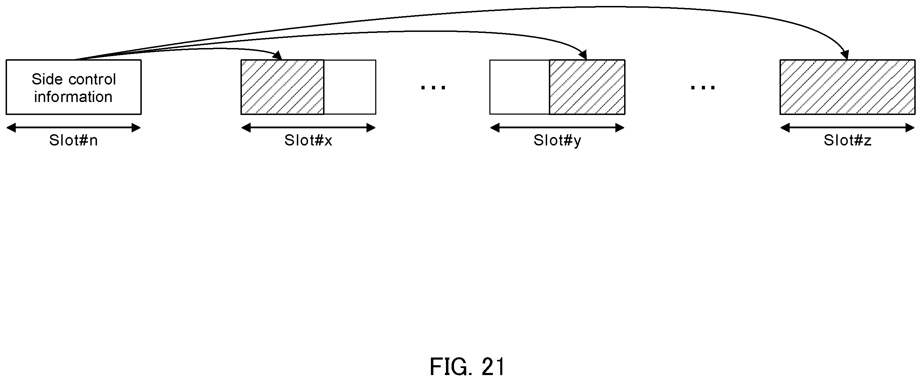

FIG. 21 is a diagram for describing Proposal 5.2. The NCR indicates, using one SCI, a plurality of slots in which the ATDR for the NCR-Fwd is configured, and the start symbol and the number of symbols in each of the plurality of slots.

For example, as illustrated in FIG. 21, the NCR indicates a plurality of slots "#x," "#y," and "#z" in which the ATDR for the NCR-Fwd is configured, using one SCI in slot #n.

For example, in slot "#x," the first symbol is indicated as the start symbol of the ATDR for the NCR-Fwd. Further, in slot "#x," a part of the symbols in slot "#x" is indicated as the symbols of the ATDR for the NCR-Fwd.

For example, in slot "#y," a symbol in the middle is indicated as the start symbol of the ATDR for the NCR-Fwd. Further, in slot "#y," a part of the symbols in slot "#y" is indicated as the symbols of the ATDR for the NCR-Fwd.

For example, in slot "#z," the first symbol is indicated as the start symbol of the ATDR for the NCR-Fwd. Further, in slot "#z," all symbols in slot "#z" are indicated as the symbols of the ATDR for the NCR-Fwd.

A TDRA table is used for configuration of the ATDR for the NCR-Fwd. For example, the TDRA table is used for the configuration of the ATDR in slots "#x," "#y," and "#z" illustrated in FIG. 21.

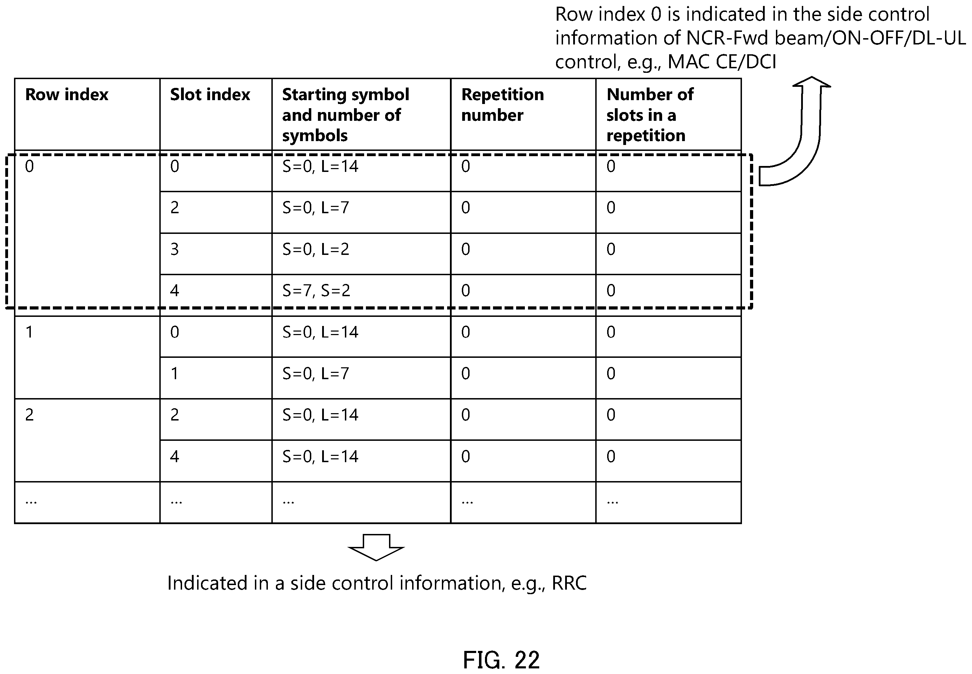

FIG. 22 illustrates an example of the TDRA table. As illustrated in FIG. 22, the TDRA table for the ATDR for the NCR-Fwd has a row index. The TDRA table includes a slot index associated with the row index, a start symbol and a number of symbols, a number of repetitions, and a number of slots for repetition.

One row index is associated with a plurality of sets each including a slot index, a start symbol and the number of symbols, the number of repetitions, and the number of slots for the repetition. For example, in FIG. 22, four sets are associated with row index "0." The parameters in the TDRA table are indicated to/configured to/for the NCR using higher layer signaling such as RRC/MAC CE.

The TDRA table may include the slot index described in Proposal 2.1 or Proposal 2.2. The TDRA table may include the start symbol and the number of symbols described in Proposal 3.1 or Provision 3.2. The TDRA table may include the number of repetitions described in Proposal 4.1. The TDRA table may include the number of slots for each repetition described in Proposal 4.2.

The NCR refers to the TDRA table based on a row index included in the SCI on the NCR-Fwd beam/NCR-Fwd ON-OFF/NCR-Fwd DL-UL control, and thus determines the ATDR to which the NCR-Fwd beam/NCR-Fwd ON-OFF/NCR-Fwd DL-UL is allocated. That is, the NCR-Fwd beam/NCR-Fwd ON-OFF/NCR-Fwd DL-UL is applied to the ATDR corresponding to the row index indicated in the SCI. The SCI including the row index for reference to the TDRA table is indicated by lower layer signaling such as DCI or higher layer signaling such as RRC/MAC CE.

As described in FIG. 22, a plurality of sets of each including a slot index, a start symbol and the number of symbols, the number of repetitions, and the number of slots for the repetition are associated with the row index. Thus, a plurality of slots are configured for the ATDR for the NCR-Fwd based on one SCI including a row index (see FIG. 21).

Note that, the plurality of slots associated with one row index may be consecutive or need not be consecutive.

The TDRA table may include some of the parameters described above. Some parameters need not be supported, required, or provided (indicated/configured).

The TDRA table may be provided with some of the parameters described above. A parameter that is not provided may be directly indicated using the SCI. For example, the parameter that is not provided may be directly indicated using the SCI on the NCR-Fwd beam/NCR-Fwd ON-OFF/NCR-Fwd DL-UL control. Alternatively, the parameter that is not provided may be indicated using another SCI different from the SCI on the NCR-Fwd beam/NCR-Fwd ON-OFF/NCR-Fwd DL-UL control. Alternatively, the parameter that is not provided may be pre-defined by specifications, for example.

The parameters in the TDRA table are not limited to the above parameters. The TDRA table may have other parameters.

<Summary of Proposal 5.2>

As described above, to the NCR, a plurality of slots in which the ATDR for the NCR-Fwd is configured and the start symbol and the number of symbols in each of the plurality of slots are indicated using one SCI.

This configuration enables the NCR to allocate the ATDR for the NCR-Fwd to the plurality of slots and forward a signal appropriately. Further, the NCR refers to the table using the indicated row index and configures the ATDR for the NCR-Fwd, thereby reducing overhead when the ATDR for the NCR-Fwd is configured.

<Capability of NCR>

The NCR may report the following NCR capabilities to the base station as NCR capabilities.

- Whether to support NCR access link beam control;
- Whether to support NCR backhaul link beam control using new signaling/new SCI;
- Whether to support NCR ON-OFF control using new signaling/new SCI;
- Whether to support NCR DL-UL (TDD) control with new signaling/new SCI; and
- Whether to support the ATDR indication scheme(s) in Proposal 4.1, Proposal 4.2, Proposal 4.3, and/or Proposal 5.2.

Each proposal described above may be applied to the NCR when the corresponding one of the capabilities is supported by the NCR and/or is enabled by higher layer signaling such as RRC.

<Others>

In the above, a plurality of (different) types of SCI may be supported for NCR-Fwd beam/NCR-Fwd ON-OFF/NCR-Fwd DL-UL. For the different types of SCI, different options/Alts may be used.

Different options/Alts may be used for the ON indication and the OFF indication on the NCR-Fwd. Different options/Alts may be used for the DL indication and the UL indication on the NCR-Fwd. Different options/Alts may be used for the DL beam indication and the UL beam indication on the NCR-Fwd.

The ATDR may be configured in both or either of the backhaul link and the access link for the NCR-Fwd.

<Configuration of Repeater>

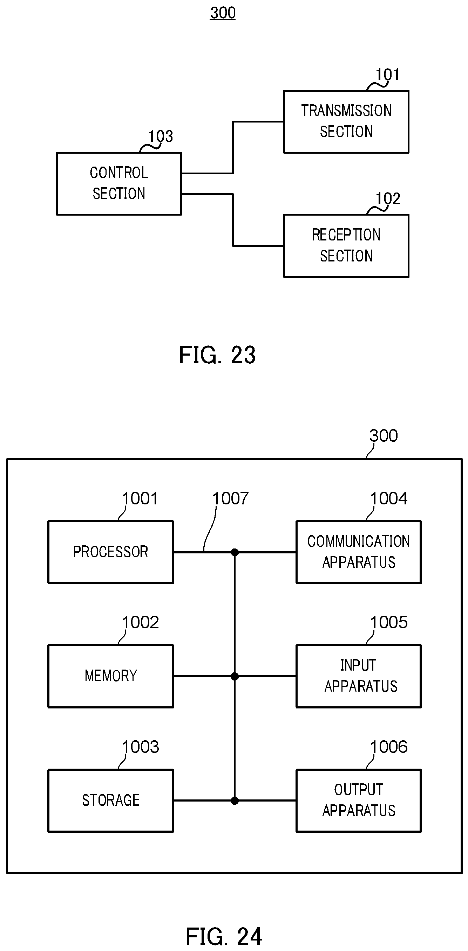

FIG. 23 is a block diagram illustrating an example of a configuration of repeater 300 according to the embodiment of the present disclosure. Repeater 300 includes, for example, transmission section 101, reception section 102, and control section 103. Repeater 300 communicates with, for example, base station 100 and terminal 200 (see FIG. 1) by radio. Note that, transmission section 101 and reception section 102 may be collectively referred to as a communication unit.

Transmission section 101 transmits a UL signal, which is received from terminal 200 addressed to base station 100, to base station 100. Further, transmission section 101 transmits a DL signal, which is received from base station 100 addressed to terminal 200, to terminal 200. For example, transmission section 101 transmits the UL signal under the control of control section 103.

Reception section 102 receives a DL signal transmitted from base station 100. Further, reception section 102 receives a UL signal transmitted from terminal 200. For example, reception section 102 receives the DL signal and the UL signal under the control of control section 103. Note that examples of the signals to be received may include a signal addressed to base station 100, a signal addressed to terminal 200, and a signal addressed to repeater 300.

Control section 103 controls the overall (communication) operation of repeater 300, including the transmission processing in transmission section 101 and the reception processing in reception section 102.

For example, control section 103 acquires information such as data and control information from a higher layer and outputs the information to transmission section 101. Further, control section 103 outputs, for example, data and control information received from reception section 102 to the higher layer.

Control section 103 executes operations other than the transmission and reception described in the above embodiment (operations may be executed by transmission section 101 and/or reception section 102).

Further, in FIG. 23, a configuration in which transmission section 101, reception section 102, and control section 103 are included one each is illustrated, but the present disclosure is not limited to this. For example, as described above, since repeater 300 includes two functional entities; the NCR-MT that performs communication in the control link; and the NCR-Fwd that performs communication in the access link and the backhaul link, repeater 300 may include reception sections, transmission sections, and control sections respectively corresponding to the NCR-MT and the NCR-Fwd. Further, the repeater may include reception sections, transmission sections, and control sections respectively corresponding to communication in the control link, in the access link, and in the backhaul link.

Note that repeater 300 in the present disclosure may be an example of a communication apparatus. Further, repeater 300 in the present disclosure may be referred to by another name such as a forwarding apparatus or a relay apparatus. Further, repeater 300 in the present disclosure may be replaced with terminal 200 (for example, UE). For example, repeater 300 may be regarded as terminal 200 having a forwarding function (or relay function).

Reception section 102 receives SCI via the control link used for the exchange of the SCI between base station 100 and repeater 300.

Control section 103 determines, based on the SCI received by reception section 102, the ATDR allocated to repeater 300 (NCR-Fwd) in the access link/backhaul link used for forwarding a signal between base station 100 and terminal 200.

Control section 103 may configure the SCS/CP for the ATDR to the SCS/CP in the control link. Control section 103 may configure the SCS/CP for the ATDR to a preconfigured SCS/CP. Control section 103 may determine the SCS/CP for the ATDR based on the SCI.

Control section 103 may determine the slot to which the ATDR is allocated based on information on a slot included in the SCI. The information on the slot may be an offset from the slot of the received SCI or may be one or more slot indices.

Control section 103 may determine the symbols to which the ATDR is allocated based on information on the symbol from which the ATDR starts and information on the number of symbols of the ATDR included in the SCI.

Control section 103 may allocate one information block repeatedly to a plurality of time resource units (slot or a plurality of symbols) and/or allocate one information block over a plurality of time resource units based on the SCI.

Reception section 101 may receive a table related to allocation of the ATDR, which includes a row index, a start symbol and the number of symbols, the number of repetitions, and the number of slots used in one repetition. Control section 103 may determine the ATDR with reference to the table based on the row index included in the SCI.

The present disclosure has been described above. It should be noted that the categorization of items in the above description is not essential for the present disclosure, and the matters described in two or more items may be used in combination as necessary, or a matter described in a certain item may be applied to a matter described in another item (unless these matters are incompatible with each other).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmission section (transmitting unit)," a "transmitter," and the like. The method for implementing each component is not particularly limited as described above.

For example, a repeater according to one embodiment of the present disclosure may function as a computer that executes the processes of the radio communication method of the present disclosure. FIG. 24 is a diagram to show an example of a hardware structure of repeater 300 according to one embodiment. Physically, the above-described repeater 300 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of repeater 300 may be configured to include one or more of apparatuses shown in the drawings, or may be configured not to include part of apparatuses.

Each function of repeater 300 is implemented, for example, by allowing certain software (programs) to be read on hardware such as the processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, control section 103 described above may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 103 of repeater 300 may be implemented by control programs that are stored in memory 1002 and that operate on processor 1001, and other functional blocks may be implemented likewise. The various processes have been described to be performed by a single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, transmission section 101 and reception section 102, and the like, may be implemented by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, repeater 300 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, processor 1001 may be implemented with at least one of these pieces of hardware.

<Notification of Information and Signaling>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

<Applied System>

The embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (Wi-MAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

<Processing Procedure and the like>

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

<Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

<Direction of Input and Output>

The information or the like (see the item of "Information and Signals") described in this disclosure may be output from a higher layer (or lower layer) to a lower layer (or higher layer). The information or signals may be input or output through multiple network nodes.

<Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

<Determination Method>

A decision or a determination in an embodiment of the present invention may be realized by a value (0 or 1) represented by one bit, by a Boolean value (true or false), or by comparison of numerical values (e.g., comparison with a predetermined values).

<Variations and the like of Aspects>

Each aspect/embodiment described in the present disclosure may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present disclosure has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present disclosure are for illustrative purposes only, and are not intended to be limitations to the present disclosure.

<Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

<Information and Signals>

Information, a signal, or the like, described in the present disclosure may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

<"System" and "Network">

As used in the present disclosure, the terms "system" and "network" are used interchangeably.

<Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

<Base Station>

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

<Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

<Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be replaced with a terminal. For example, the embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, the terminals may have the functions of the base station described above. The words such as "uplink" and "downlink" may be replaced with the words corresponding to the terminal-to-terminal communication (for example, "sidelink"). For example, an uplink channel, a downlink channel and so on may be replaced with a sidelink channel.

Likewise, the terminal in the present disclosure may be interpreted as base station. In this case, the base station may have the function of the terminal described above.

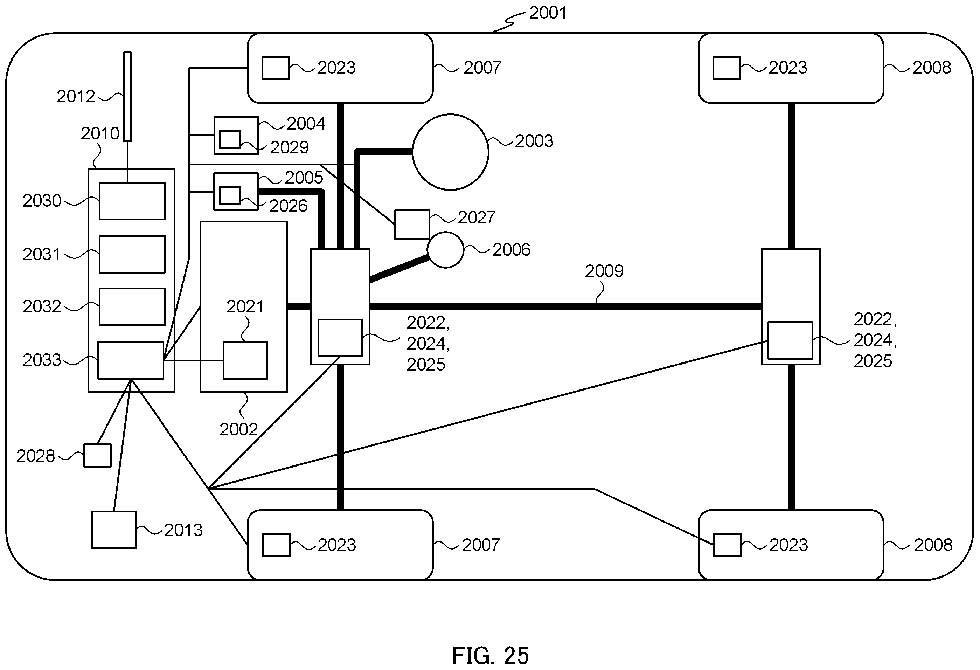

FIG. 25 illustrates a configuration example of vehicle 2001. As illustrated in FIG. 25, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. Each of the aspects/embodiments described in the present disclosure may be applied to a communication apparatus mounted on vehicle 2001 and may, for example, be applied to communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from various sensors 2021 to 2029 provided in vehicle 2001. Electronic control unit 2010 may be referred to as an Electronic control unit (ECU).

The signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal for detecting an obstacle, a vehicle, a pedestrian, or the like obtained by object detection sensor 2028, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. Information service unit 2012 provides various types of multimedia information and multimedia services to the occupants of vehicle 2001 by using information obtained from the external device through communication module 2013 or the like.

Information service unit 2012 may include an input device (for example, keyboard, mouse, microphone, switch, button, sensor, touchscreen, and the like) for receiving input from the outside, or may include an output device (for example, display, speaker, LED lamp, touchscreen, and the like) for implementing output to the outside.

Driving support system unit 2030 includes: various devices for providing functions of preventing accidents and reducing the driving load of the driver, such as a millimeter wave radar, a Light Detection and Ranging (LiDAR), a camera, a positioning locator (e.g., GNSS, etc.), map information (e.g., high definition (HD) map, autonomous vehicle (AV) map, etc.), a gyro system (e.g., Inertial Measurement Unit (IMU), Inertial Navigation System (INS), etc.), an Artificial Intelligence (AI) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 2029 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (user) obtained via the information service unit 2012, to the external apparatus via radio communication. Electronic control unit 2010, various sensors 2021 to 2029, information service unit 2012, and the like may be referred to as input units that receive input. For example, PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on PDSCH received by communication module 2013 (or data/information decoded from PDSCH)).

In addition, communication module 2013 stores the various types of information received from the external devices in memory 2032 available to microprocessor 2031. On the basis of the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029, etc., mounted in vehicle 2001.

<Meaning and Interpretation of Terms>

As used herein, the term "determining" may encompasses a wide variety of actions. For example, "determining" may be regarded as judging, calculating, computing, processing, deriving, investigating, looking up, searching, inquiring (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

<Reference Signal>

A reference signal may be abbreviated as an "RS," and may be referred to as a "pilot," a "pilot signal," and so on, depending on which standard applies.

<Meaning of "based on">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

<Terms "first" and "second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

<Means>

"Means" included in the configuration of each of the above apparatuses may be replaced by "parts", "circuits", "devices", or the like.

<Open-ended Format>

In the case where the terms "include", "including" and variations thereof are used in the present disclosure, these terms are intended to be comprehensive in the same way as the term "comprising". Further, the term "or" used in the present specification is not intended to be an "exclusive or".

<Time Units such as a TTI, Frequency Units such as an RB, and a Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a Transmission Time Interval (TTI), a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be replaced with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

<Maximum Transmit Power>

The "maximum transmit power" described in the present disclosure may mean a maximum value of the transmit power, the nominal UE maximum transmit power, or the rated UE maximum transmit power.

<Article>

In the present disclosure, where an article is added by translation, for example "a", "an", and "the", the disclosure may include that the noun following these articles is plural.

<"Different">

In the present disclosure, the term "A and B are different" may mean "A and B are different from each other." It should be noted that the term "A and B are different" may mean "A and B are different from C." Terms such as "separated" or "combined" may be interpreted in the same way as the above-described "different".

Industrial Applicability

An aspect of the present disclosure is useful for a radio communication system including a repeater.

Reference Signs List

10 Radio communication system
20 NG-RAN
100 Base station (gNB)
200 Terminal (UE)
300 Relay apparatus (NCR)
101 Transmission section
102 Reception section
103 Control section
1001 Processor
1002 Memory
1003 Storage
1004 Communication apparatus
1005 Input apparatus
1006 Output apparatus
1007 Bus

**Claims**

1. A repeater, comprising:

   a reception section that receives control information via a first link used for exchanging the control information between a base station and the repeater; and
   a control section that determines, based on the control information, a time resource allocated to the repeater in a second link used for forwarding a signal between the base station and a terminal.

2. The repeater according to claim 1, wherein the control section determines a slot to which the time resource is allocated, based on information on a slot, the information being included in the control information.

3. The repeater according to claim 1, wherein the control section determines a symbol to which the time resource is allocated, based on information on a symbol from which the time resource starts and information on the number of symbols of the time resource, the information being both included in the control information.

4. The repeater according to claim 1, wherein the control section allocates one information block repeatedly to a plurality of time resource units and/or allocates one information block over a plurality of time resource units, based on the control information.

5. The repeater according to claim 1, wherein:

   the reception section receives information on allocation of the time resource, the information including a row index, a start symbol and the number of symbols, the number of repetitions, and the number of slots used in one repetition, and
   the control section determines the time resource with reference to the information, based on a row index included in the control information.

6. A communication method for a repeater, the communication method comprising:

   receiving control information via a first link used for exchanging the control information between a base station and the repeater; and
   determining, based on the control information, a time resource allocated to the repeater in a second link used for forwarding a signal between the base station and a terminal.

FIG. 1

FIG. 2

FIG. 3

FIG. 4

| PDSCH mapping type | Normal cyclic prefix | | | Extended cyclic prefix | | |
|---|---|---|---|---|---|---|
| | S | L | S+L | S | L | S+L |
| Type A | {0,1,2,3} (Note 1) | {3,...,14} | {3,...,14} | {0,1,2,3} (Note 1) | {3,...,12} | {3,...,12} |
| Type B | {0,...,12} | {2,...,13} | {2,...,14} | {0,...,10} | {2,4,6} | {2,...,12} |
| Note 1:    S = 3 is applicable only if *dmrs-TypeA-Position* = 3 | | | | | | |

FIG. 5

| PUSCH mapping type | Normal cyclic prefix | | | Extended cyclic prefix | | |
|---|---|---|---|---|---|---|
| | $S$ | $L$ | $S+L$ | $S$ | $L$ | $S+L$ |
| Type A (repetition Type A only) | 0 | {4,...,14} | {4,...,14} | 0 | {4,...,12} | {4,...,12} |
| Type B | {0,...,13} | {1,...,14} | {1,...,14} for repetition Type A, {1,...,27} for repetition Type B | {0,..., 11} | {1,...,12} | {1,...,12} for repetition Type A, {1,...,23} for repetition Type B |

FIG. 6

| Side control information | ... | Applicable time domain resources |
|---|---|---|

Slot#n                              Slot#m

FIG. 7

| Side control information | ... | Appliable time domain resources | ... | Appliable time domain resources | ... | Appliable time domain resources |

$\longleftrightarrow$ Slot#n  $\longleftrightarrow$ Slot#x  $\longleftrightarrow$ Slot#y  $\longleftrightarrow$ Slot#z

FIG. 8

A9a

| List index | List of slot index |
|------------|--------------------|
| 0 | Slot#1, 4, 5, 8 |
| 1 | Slot#2, 3, 6, 7 |
| 2 | Slot#1, 5, 8, 9 |
| 3 | Slot#3, 4, 5, 6 |
| ... | ... |

⇨ list index 0 is indicated in the side control information of NCR-Fwd beam/ON-OFF/DL-UL control, e.g., MAC CE/DCI

⇩ Indicated in a side control information, e.g., RRC

FIG. 9

EP 4 598 192 A1

Repetition #1  #2  #3  #4

Slot#m  Slot#m+1  Slot#m+2  Slot#m+3

FIG. 10

Repetition #1  #2  #3  #4

Slot#m  Slot#m+1  Slot#m+2  Slot#m+3

FIG. 11

L symbols  L  L  L

Repetition #1  #2  #3  #4

Slot#m  Slot#m+1  Slot#m+2  Slot#m+3

FIG. 12

FIG. 13

L symbols | L | L | L

| Side control information | | Repetition #1 | #2 | #3 | #4 | | |
| --- | --- | --- | --- | --- | --- | --- | --- |

Slot#n

Slot#m | Slot#m+1 | Slot#m+2 | Slot#m+3

FIG. 14

e.g., N=2, K=2

FIG. 15

e.g., N=2, K=2

FIG. 16

e.g., N=2, K=2

(a slot determined as not available)

Slot#m   Slot#m+1   Slot#m+2   Slot#m+3   Slot#m+4

Repetition#1

Repetition#2

FIG. 17

FIG. 18

Row index 0 is indicated
in the side control information of
NCR-Fwd beam/ON-OFF/DL-UL control,
e.g., RRC/MAC CE/DCI

| Row index | Slot index | Starting symbol and number of symbols | Repetition number | Number of slots in a repetition |
|-----------|-----------|----------------------------------------|-------------------|----------------------------------|
| 0 | 0 | S=0, L=14 | 0 | 0 |
| 1 | 2 | S=0, L=7 | 1 | 0 |
| 2 | 3 | S=0, L=2 | 0 | 2 |
| 3 | 4 | S=7, S=2 | 2 | 2 |
| ... | ... | ... | ... | ... |

Indicated in a side control information, e.g., RRC/MAC CE

FIG. 19

FIG. 20

EP 4 598 192 A1

Side control information

Slot#n

Slot#x

Slot#y

Slot#z

FIG. 21

EP 4 598 192 A1

Row index 0 is indicated in the side control
information of NCR-Fwd beam/ON-OFF/DL-UL
control, e.g., MAC CE/DCI

| Row index | Slot index | Starting symbol and number of symbols | Repetition number | Number of slots in a repetition |
|---|---|---|---|---|
| 0 | 0 | S=0, L=14 | 0 | 0 |
|   | 2 | S=0, L=7 | 0 | 0 |
|   | 3 | S=0, L=2 | 0 | 0 |
|   | 4 | S=7, S=2 | 0 | 0 |
| 1 | 0 | S=0, L=14 | 0 | 0 |
|   | 1 | S=0, L=7 | 0 | 0 |
| 2 | 2 | S=0, L=14 | 0 | 0 |
|   | 4 | S=0, L=14 | 0 | 0 |
| ... | ... | ... | ... | ... |

Indicated in a side control information, e.g., RRC

FIG. 22

300

TRANSMISSION SECTION — 101

CONTROL SECTION — 103

RECEPTION SECTION — 102

FIG. 23

300

PROCESSOR — 1001

1007

COMMUNICATION APPARATUS — 1004

MEMORY — 1002

INPUT APPARATUS — 1005

STORAGE — 1003

OUTPUT APPARATUS — 1006

FIG. 24

FIG. 25

# INTERNATIONAL SEARCH REPORT

| International application No. |
|---|
| **PCT/JP2022/036592** |

| A. | CLASSIFICATION OF SUBJECT MATTER |
|---|---|

*H04W 72/0446*(2023.01)i; *H04W 16/26*(2009.01)i; *H04W 72/20*(2023.01)i
FI: H04W72/0446; H04W16/26; H04W72/20

According to International Patent Classification (IPC) or to both national classification and IPC

| B. | FIELDS SEARCHED |
|---|---|

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | Sharp, Discussion on side control information to enable NCR operations, 3GPP TSG RAN WG1#110 R1-2207127, 12 August 2022 section 4 | 1-2, 6 |
| Y | section 4 | 3-5 |
| X | Sony, Additional considerations on side control information to enable NR network-controlled repeaters, 3GPP TSG RAN WG1#110 R1-2206128, 12 August 2022 sections 1, 2.1.3 | 1, 6 |
| Y | sections 1, 2.1.3 | 2-5 |
| Y | ZTE, Discussion on L1/L2 signaling for side control information, 3GPP TSG RAN WG1#110 R1-2206019, 12 August 2022 section 2.1 | 2-3 |
| Y | US 2021/0360616 A1 (COMCAST CABLE COMMUNICATIONS, LLC) 18 November 2021 (2021-11-18) paragraphs [0231]-[0238] | 4-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 March 2023** | **28 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/036592**

| Patent document cited in search report | Publication date (day/month/year) | Patent family member(s) | Publication date (day/month/year) |
|---|---|---|---|
| US 2021/0360616 A1 | 18 November 2021 | EP 3913845 A2 paragraphs [0184]-[0191] | |

Form PCT/ISA/210 (patent family annex) (January 2015)

**REFERENCES CITED IN THE DESCRIPTION**

**Non-patent literature cited in the description**

- *3GPP TSG RAN Meeting #94e, RP-213700, Electronic Meeting*, 06 December 2021

- *3GPP TS 38.214 V17.3.0*, September 2022